# EUROPÄISCHE PATENTSCHRIFT

(11) **EP 2 091 332 B1**
(45) Veröffentlichungstag und Bekanntmachung des Hinweises auf die Patenterteilung: **18.05.2016**
(21) Anmeldenummer: 07819388.5
(22) Anmeldetag: 27.10.2007
(51) Int. Cl.: A01N 47/36, A01N 43/40, A01P 13/02

(54) **HERBIZID-KOMBINATIONEN ENTHALTEND AMIDOSULFURON UND EIN PYRIDINHERBIZID**
HERBICIDAL COMBINATIONS COMPRISING AMIDOSULFURON AND A PYRIDINE-HERBICIDE
COMBINATIONS HERBICIDES COMPRENANT DE L'AMIDOSULFURON ET D'UN HERBICIDE PYRIDINIQUE

(30) Priorität: 13.11.2006 EP 06023578
(43) Veröffentlichungstag der Anmeldung: 26.08.2009
(73) Patentinhaber: Bayer Intellectual Property GmbH, 40789 Monheim am Rhein (DE)
(72) Erfinder: MARCELES PALMA, Victor, Jose, 40213 Düsseldorf (DE); EADIE, Allan, 40489 Düsseldorf (DE); BICKERS, Udo, 65779 Kelkheim (DE)
(74) Vertreter: BIP Patents
(86) Internationale Anmeldenummer: PCT/EP2007/009345
(87) Internationale Veröffentlichungsnummer: WO 2008/058622

(56) Entgegenhaltungen:
- EP-A1- 0 512 737
- EP-A2- 0 131 258
- EP-A2- 0 236 273
- WO-A-96/19110
- WO-A-03/009684
- WO-A-03/073855
- WO-A-2004/080182

## Beschreibung

Die Erfindung liegt auf dem technischen Gebiet der Pflanzenschutzmittel, die gegen Schadpflanzen z.B. in Pflanzenkulturen eingesetzt werden können und als Wirkstoffe eine Kombination von mindestens zwei speziellen Herbiziden enthalten.

Aus der Druckschrift EP-A-131258 sind Sulfonylharnstoffe und deren Salze sowie deren Verwendung als Herbizide und/oder Pflanzenwachstumsregulatoren bekannt.

Die Wirksamkeit dieser Herbizide gegen Schadpflanzen in den Pflanzenkulturen liegt auf einem hohen Niveau, hängt jedoch im allgemeinen von der Aufwandmenge, der jeweiligen Zubereitungsform, den jeweils zu bekämpfenden Schadpflanzen oder dem Schadpflanzenspektrum, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbzide oder geographisch begrenzt auftreten können. Wirkungsverluste bei einzelnen Schadpflanzen lassen sich nur bedingt durch höhere Aufwandmengen der Herbizide ausgleichen, z. B. weil damit häufig die Selektivität der Herbizide verschlechtert wird oder eine Wirkungsverbesserung auch bei höherer Aufwandmenge nicht eintritt. Teilweise kann die Selektivität in Kulturen durch Zusatz von Safenern verbessert werden. Generell besteht jedoch immer Bedarf für Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen. Allerdings treten bei der kombinierten Anwendung mehrerer Wirkstoffe nicht selten Phänomene der physikalischen und biologischen Unverträglichkeit auf, z. B. mangelnde Stabilität in einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt. Herbizid-Kombinationen mit Amidosulfuron sind aus WO03/009684 und WO03/073855 bekannt.
Überraschenderweise wurde nun gefunden, daß bestimmte Wirkstoffe aus der Gruppe der Sulfonylharnstoffe oder deren Salzen in Kombination mit bestimmten davon strukturell verschiedenen Herbiziden in besonders günstiger Weise zusammenwirken, z.B. wenn sie in Pflanzenkulturen eingesetzt werden.

Gegenstand der Erfindung sind somit Herbizid-Kombinationen, enthaltend Komponenten (A) und (B), wobei
(A) ein oder mehrere Herbizide der Formel (I) und deren Salzen bedeutet, 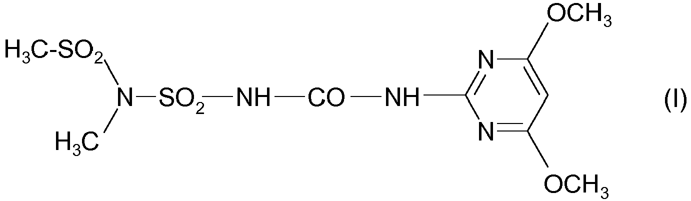 und
(B) bedeutet ein oder mehrere Herbizide aus der Gruppe Picloramund dessen Salze und Ester und Aminopyralid und dessen Salze und Ester. Bevorzugte Verbindungen (B) sind (Angabe mit dem "common name" und einer Referenzstelle, z.B. aus "The Pesticide Manual" 14th Ed., British Crop Protection Council 2006, abgekürzt "PM").
   (B1) Picloram, insbesondere auch umfassend dessen Salze und Ester (PM, S. 838 - 840), z.B. 4-amino-3,5,6-trichlorpyridin-2-carbonsäure (Aufwandmenge im allgemeinen: 20 - 300 g AS/ha, vorzugsweise 50 - 150 g AS/ha; Aufwandmengenverhältnis A : B im allgemeinen = 1 : 1 - 1 : 50, vorzugsweise 1 : 2 - 1 : 10);
   (B2) Aminopyralid, insbesondere auch umfassend dessen Salze und Ester (PM, S. 30 - 31), z.B. 4-amino-3,6-dichlorpyridin-2-carbonsäure (Aufwandmenge im allgemeinen: 10 - 200 g AS/ha, vorzugsweise 30 - 70 g AS/ha; Aufwandmengenverhältnis A : B im allgemeinen = 1 : 1 - 1 : 20, vorzugsweise 1 : 1 - 1 : 5).

Bevorzugte Mischungspartner (B) sind Picloram (B1.1), Picloram-dimethylammonium (B1.2), Picloram-isoctyl (B1.3), Picloram-Natrium (B1.4), Picloram-Kalium (B1.5), Picloram-triisopropanolammonium (B1.6), Picloram-triethanolammonium (= Picloram-trolamin) (B1.7), Picloram-triisopropylammonium (B1.8), Aminopyralid (B2.1), Aminopyralid-Natrium (B2.2), Aminopyralid-Kalium (B2.3), Aminopyralid-tri(2-hydroxypropyl)ammonium (B2.4).

Die erfindungsgemäßen Herbizid-Kombinationen weisen einen herbizid wirksamen Gehalt an Komponenten (A) und (B) auf und können weitere Komponenten enthalten, z. B. agrochemische Wirkstoffe anderer Art und/oder im Pflanzenschutz übliche Zusatzstoffe und/oder Formulierungshilfsmittel, oder zusammen mit diesen eingesetzt werden.

Die erfindungsgemäßen Herbizid-Kombinationen weisen in bevorzugter Ausführungsform synergistische Wirkungen auf. Die synergistischen Wirkungen können z.B. bei gemeinsamer Ausbringung der Wirkstoffe (A) und (B) beobachtet werden, sie können jedoch häufig auch bei zeitlich versetzter Anwendung (Splitting) festgestellt werden. Möglich ist auch die Anwendung der einzelnen Herbizide oder der Herbizid-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der erfindungsgemäßen Herbizid-Kombination.

Die synergistischen Effekte erlauben eine Reduktion der Aufwandmengen der Einzelwirkstoffe, eine höhere Wirkungsstärke bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Die genannte Formel (I), Picloram und Aminopyralid umfassen alle Stereoisomeren und deren Gemische, insbesondere auch racemische Gemische, und - soweit Enantiomere möglich sind - das jeweils biologisch wirksame Enantiomere. Die Verbindungen der Formel (I) und (II) können Salze bilden z.B. solche bei denen ein Wasserstoffatom durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃. Verbindungen der Formel (I) und ihre Salze sowie ihre Herstellung sind z.B. beschrieben in EP-A-131258 und US 4,718,937. Bevorzugte Verbindungen der Formel (I) und deren Salze sind 1-(4,6-dimethoxypyrimidin-2-yl)-3-mesyl-(methyl)sulfamoyl-harnstoff (Amidosulfuron, A1.1) und dessen Natriumsalz (A1.2) (siehe z.B. EP-A-131258 und PM, S. 27-28).

Die genannten Wirkstoffe der Formel (I) und deren Salze können das Enzym Acetolactatsynthase (ALS) und damit die Proteinsynthese in Pflanzen hemmen. Die Aufwandmenge der Wirkstoffe der Formel (I) und deren Salze kann in weiten Bereichen variieren, beispielsweise zwischen 1 g und 500 g AS/ha (AS/ha bedeutet "Aktivsubstanz pro Hektar" = bezogen auf 100%igen Wirkstoff). Bei Anwendungen mit Aufwandmengen von 10 g bis 300 g AS/ha der Wirkstoffe der Formel (I) und deren Salzen, vorzugsweise der Wirkstoffe (A1.1), (A1.2), wird im Vor- und Nachauflaufverfahren ein relativ breites Spektrum an Schadpflanzen bekämpft. Bei den erfindungsgemäßen Kombinationen liegen die Aufwandmengen in der Regel niedriger, z. B. im Bereich von 0,5 bis 200 g AS/ha, vorzugsweise 1 bis 120 g AS/ha.

Wenn im Ramen dieser Beschreibung die Kurzform des "common name" eines Wirkstoffs verwendet wird, so sind damit Ester, Salze und Isomere, insbesondere optische Isomere umfasst, insbesondere die handelsüblichen Form bzw. Formen, soweit sich nicht aus dem Zusammenhang etwas anderes ergibt. Bei Sulfonamiden wie Sulfonylharnstoffen sind mit Salzen auch die umfaßt, die durch Austausch eines Wasserstoffatoms an der Sulfonamidgruppe durch ein Kation entstehen.

Von besonderem Interesse sind erfindungsgemäße Herbizid-Kombinationen mit einem Gehalt an folgenden Verbindungen (A) + (B):
(A1.1) + (B1.1), (A1.1) + (B1.2), (A1.1) + (B1.3), (A1.1) + (B1.4), (A1.1) + (B1.5),
(A1.1) + (B1.6), (A1.1) + (B1.7), (A1.1) + (B1.8), (A1.1) + (B2.1), (A1.1) + (B2.2),
(A1.1) + (B2.3), (A1.1) + (B2.4);
(A1.2) + (B1.1), (A1.2) + (B1.2), (A1.2) + (B1.3), (A1.2) + (B1.4), (A1.2) + (B1.5),
(A1.2) + (B1.6), (A1.2) + (B1.7), (A1.2) + (B1.8), (A1.2) + (B2.1), (A1.2) + (B2.2),
(A1.2) + (B2.3), (A1.2) + (B2.4).

Es kann sinnvoll sein, eine oder mehrere Verbindungen (A) mit mehreren Verbindungen (B) zu kombinieren, oder mehrere Verbindungen (A) mit einer oder mehreren Verbindungen (B) zu kombinieren. Weiterhin können die erfindungsgemäßen Kombinationen agrochemische Wirkstoffe anderer Struktur (Wirkstoffe (C)) beispielsweise aus der Gruppe der Safener, Fungizide, Herbizide, Insektizide und Pflanzenwachstumsregulatoren oder im Pflanzenschutz übliche Zusatzstoffe und Formulierungshilfsmittel enthalten oder zusammen mit diesen eingesetzt werden. Für solche Kombinationen gelten die nachstehend insbesondere für erfindungsgemäße Kombinationen (A) + (B) erläuterten bevorzugten Bedingungen in erster Linie ebenfalls, soweit darin die erfindungsgemäßen Kombinationen (A) + (B) enthalten sind und bezüglich der betreffenden Kombination (A) + (B). Zusatzstoffe sind beispielsweise Düngemittel und Farbstoffe. Bevorzugte agrochemische Wirkstoffe (C) sind Herbizide und/oder Safener.

Zur Anwendung der erfindungsgemäßen Herbizid-Kombination in Pflanzenkulturen kann es je nach Pflanzenkultur zweckmäßig sein, ab bestimmter Aufwandmengen einen Safener (C) zu applizieren, um eventuelle Schäden an der Kulturpflanze zu reduzieren oder zu vermeiden. Folgende Gruppen von Verbindungen sind beispielsweise als Safener (C) geeignet:
a) Verbindungen vom Typ der Dichlorphenylpyrazolin-3-carbonsäure (S1), vorzugsweise Verbindungen wie
   1-(2,4-Dichlorphenyl)-5-(ethoxycarbonyl)-5-methyl-2-pyrazolin-3-carbonsäureethylester (S1-1, Mefenpyr-diethyl), und verwandte Verbindungen, wie sie z.B. in der WO 91/07874 und PM (S.594-595) beschrieben sind,
b) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind.
c) Verbindungen vom Typ der Triazolcarbonsäuren (S1), vorzugsweise Verbindungen wie Fenchlorazol, d.h. 1-(2,4-Dichlorphenyl)-5-trichlormethyl-(1 H)-1,2,4-triazol-3-carbonsäureethylester (S1-6), und verwandte Verbindungen (siehe EP-A-174 562 und EP-A-346 620);
d) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie z.B. in WO 91/08202 beschrieben sind, bzw. der 5,5-Diphenyl-2-isoxazolin-3-carbonsäureethylester (S1-9, Isoxadifen-ethyl) oder -n-propylester (S1-10) oder der 5-(4-Fluorphenyl)-5-phenyl-2-isoxazolin-3-carbonsäureethylester (S1-11), wie sie in der Patentanmeldung (WO-A-95/07897) beschrieben sind.
e) Verbindungen vom Typ der 8-Chinolinoxyessigsäure (S2), vorzugsweise (5-Chlor-8-chinolinoxy)-essigsäure-(1-methyl-hex-1-yl)-ester (S2-1, Cloquintocet-mexyl, z.B. PM (S. 195-196), (5-Chlor-8-chinolinoxy)-essigsäure-(1,3-dimethyl-but-1-yl)-ester (S2-2), (5-Chlor-8-chinolinoxy)-essigsäure-4-allyl-oxy-butylester (S2-3), (5-Chlor-8-chinolinoxy)-essigsäure-1-allyloxy-prop-2-ylester (S2-4), (5-Chlor-8-chinolinoxy)-essigsäureethylester (S2-5), (5-Chlor-8-chinolinoxy)-essigsäuremethylester (S2-6), (5-Chlor-8-chinolinoxy)-essigsäureallylester (S2-7), (5-Chlor-8-chinolinoxy)-essigsäure-2-(2-propyliden-iminoxy)-1-ethylester (S2-8), (5-Chlor-8-chinolinoxy)-essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind.
f) Verbindungen vom Typ der (5-Chlor-8-chinolinoxy)-malonsäure, vorzugsweise Verbindungen wie (5-Chlor-8-chinolinoxy)-malonsäure-diethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind.
g) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).
h) Wirkstoffe vom Typ der Pyrimidine, wie "Fenclorim" (PM, S. 386-387) (= 4,6-Dichlor-2-phenylpyrimidin),
i) Wirkstoffe vom Typ der Dichloracetamide, die häufig als Vorauflaufsafener (bodenwirksame Safener) angewendet werden, wie z.B.
   "Dichlormid" (PM, S. 270-271) (= N,N-Diallyl-2,2-dichloracetamid), AR-29148" (= 3-Dichloracetyl-2,2,5-trimethyl-1,3-oxazolidon von der Firma Stauffer),
   "Benoxacor" (PM, S. 74-75) (= 4-Dichloracetyl-3,4-dihydro-3-methyl-2H-1,4-benzoxazin).
   APPG-1292" (= N-Allyl-N[(1,3-dioxolan-2-yl)-methyl]dichloracetamid von der Firma PPG Industries),
   ADK-24" (= N-Allyl-N-[(allylaminocarbonyl)-methyl]-dichloracetamid von der Firma Sagro-Chem),
   AAD-67" oder AMON 4660" (= 3-Dichloracetyl-1-oxa-3-aza-spiro[4,5]decan von der Firma Nitrokemia bzw. Monsanto),
   "Diclonon" oder ABAS145138" oder ALAB145138" (= (= 3-Dichloracetyl-2,5,5-trimethyl-1,3-diazabiclyco[4.3.0]nonan von der Firma BASF) und "Furilazol" oder AMON 13900" (siehe PM, S. 482-483) (= (RS)-3-Dichloracetyl-5-(2-furyl)-2,2-dimethyloxazolidon)
j) Wirkstoffe vom Typ der Dichloracetonderivate, wie z.B.
   AMG 191" (CAS-Reg. Nr. 96420-72-3) (= 2-Dichlormethyl-2-methyl-1,3-dioxolan von der Firma Nitrokemia),
k) Wirkstoffe vom Typ der Oxyimino-Verbindungen, die als Saatbeizmittel bekannt sind, wie z.B.
   "Oxabetrinil" (PM, S. 689) (= (Z)-1,3-Dioxolan-2-ylmethoxyimino(phenyl)acetonitril), das als Saatbeiz-Safener gegen Schäden von Metolachlor bekannt ist,
   "Fluxofenim" (PM, S. 467-468) (= 1-(4-Chlorphenyl)-2,2,2-trifluor-1-ethanon-O-(1,3-dioxolan-2-ylmethyl)-oxim, das als Saatbeiz-Safener gegen Schäden von Metolachlor bekannt ist, und
   "Cyometrinil" oder A-CGA-43089" (PM, S. 983) (= (Z)-Cyanomethoxyimino (phenyl)acetonitril), das als Saatbeiz-Safener gegen Schäden von Metolachlor bekannt ist,
l) Wirkstoffe vom Typ der Thiazolcarbonsäureester, die als Saatbeizmittel bekannt sind, wie z.B.
   "Flurazol" (PM, S. 450-451) (= 2-Chlor-4-trifluormethyl-1,3-thiazol-5-carbonsäurebenzylester), das als Saatbeiz-Safener gegen Schäden von Alachlor und Metolachlor bekannt ist,
m) Wirkstoffe vom Typ der Napthalindicarbonsäurederivate, die als Saatbeizmittel bekannt sind, wie z.B.
   "Naphthalic anhydrid" (PM, S. 1009-1010) (= 1,8-Naphthalindicarbonsäureanhydrid), das als Saatbeiz-Safener für Mais gegen Schäden von Thiocarbamatherbiziden bekannt ist,
n) Wirkstoffe vom Typ Chromanessigsäurederivate, wie z.B.
   ACL 304415" (CAS-Reg. Nr. 31541-57-8) (= 2-84-Carboxy-chroman-4-yl)-essigsäure von der Firma American Cyanamid),
o) Wirkstoffe, die neben einer herbiziden Wirkung gegen Schadpflanzen auch Safenerwirkung an Kulturpflanzen aufweisen, wie z.B.
   "Dimepiperate" oder AMY-93" (PM, S. 302-303) (= Piperidin-1-thiocarbonsäure-S-1-methyl-1-phenylethylester),
   "Daimuron" oder ASK 23" (PM, S. 247) (= 1-(1-Methyl-1-phenylethyl)-3-p-tolyl-harnstoff),
   "Cumyluron" = AJC-940" (= 3-(2-Chlorphenylmethyl)-1-(1-methyl-1-phenylethyl)-harnstoff, siehe JP-A-60087254),
   "Methoxyphenon" oder ANK 049" (= 3,3'-Dimethyl-4-methoxy-benzophenon),
   "CSB" (= 1-Brom-4-(chlormethylsulfonyl)-benzol) (CAS-Reg. Nr. 54091-06-4 von Kumiai).

Bevorzugte Herbizide (C) sind lodosulfuron und dessen Salze und Ester (C1), z.B. lodosulfuron-methyl-Natrium (C1.1), Bromoxynil und dessen Salze und Ester (C2), z.B. Bromoxynil-octanoat (C2.1), Bromoxynil-heptanoat (C2.2), Bromoxynil-Natrium (C2.3), Bromoxynil-Kalium (C2.4), loxynil und dessen Salze und Ester (C3), z.B. loxynil-Natrium (C3.1), loxynil-octanoat (C3.2), Metribuzin (C4), Propoxycarbazone und dessen Salze und Ester (C5), z.B. Propoxycarbazone-Natrium (C5.1), Ethofumesate (C6), Diflufenican (C7), Ethoxysulfuron und dessen Salze und Ester (C8), z.B. Ethoxysulfuron (C8.1).

Besonders bevorzugte Herbizid-Kombinationen dieser Art sind:
(A1.1) + (B1.1) + (C1.1), (A1.1) + (B1.2) + (C1.1), (A1.1) + (B1.3) + (C1.1),
(A1.1) + (B1.4) + (C1.1), (A1.1) + (B1.5) + (C1.1), (A1.1) + (B1.6) + (C1.1),
(A1.1) + (B1.7) + (C1.1), (A1.1) + (B1.8) + (C1.1), (A1.1) + (B2.1) + (C1.1),
(A1.1) + (B2.2) + (C1.1), (A1.1) + (B2.3) + (C1.1), (A1.1) + (B2.4) + (C1.1);

(A1.2) + (B1.1) + (C1.1), (A1.2) + (B1.2) + (C1.1), (A1.2) + (B1.3) + (C1.1),
(A1.2) + (B1.4) + (C1.1), (A1.2) + (B1.5) + (C1.1), (A1.2) + (B1.6) + (C1.1),
(A1.2) + (B1.7) + (C1.1), (A1.2) + (B1.8) + (C1.1), (A1.2) + (B2.1) + (C1.1),
(A1.2) + (B2.2) + (C1.1), (A1.2) + (B2.3) + (C1.1), (A1.2) + (B2.4) + (C1.1);

(A1.1) + (B1.1) + (C2.1), (A1.1) + (B1.2) + (C2.1), (A1.1) + (B1.3) + (C2.1),
(A1.1) + (B1.4) + (C2.1), (A1.1) + (B1.5) + (C2.1), (A1.1) + (B1.6) + (C2.1),
(A1.1) + (B1.7) + (C2.1), (A1.1) + (B1.8) + (C2.1), (A1.1) + (B2.1) + (C2.1),
(A1.1) + (B2.2) + (C2.1), (A1.1) + (B2.3) + (C2.1), (A1.1) + (B2.4) + (C2.1);

(A1.2) + (B1.1) + (C2.1), (A1.2) + (B1.2) + (C2.1), (A1.2) + (B1.3) + (C2.1),
(A1.2) + (B1.4) + (C2.1), (A1.2) + (B1.5) + (C2.1), (A1.2) + (B1.6) + (C2.1),
(A1.2) + (B1.7) + (C2.1), (A1.2) + (B1.8) + (C2.1), (A1.2) + (B2.1) + (C2.1),
(A1.2) + (B2.2) + (C2.1), (A1.2) + (B2.3) + (C2.1), (A1.2) + (B2.4) + (C2.1);

(A1.1) + (B1.1) + (C2.2), (A1.1) + (B1.2) + (C2.2), (A1.1) + (B1.3) + (C2.2),
(A1.1) + (B1.4) + (C2.2), (A1.1) + (B1.5) + (C2.2), (A1.1) + (B1.6) + (C2.2),
(A1.1) + (B1.7) + (C2.2), (A1.1) + (B1.8) + (C2.2), (A1.1) + (B2.1) + (C2.2),
(A1.1) + (B2.2) + (C2.2), (A1.1) + (B2.3) + (C2.2), (A1.1) + (B2.4) + (C2.2);

(A1.2) + (B1.1) + (C2.2), (A1.2) + (B1.2) + (C2.2), (A1.2) + (B1.3) + (C2.2),
(A1.2) + (B1.4) + (C2.2), (A1.2) + (B1.5) + (C2.2), (A1.2) + (B1.6) + (C2.2),
(A1.2) + (B1.7) + (C2.2), (A1.2) + (B1.8) + (C2.2), (A1.2) + (B2.1) + (C2.2),
(A1.2) + (B2.2) + (C2.2), (A1.2) + (B2.3) + (C2.2), (A1.2) + (B2.4) + (C2.2);

(A1.1) + (B1.1) + (C2.3), (A1.1) + (B1.2) + (C2.3), (A1.1) + (B1.3) + (C2.3),
(A1.1) + (B1.4) + (C2.3), (A1.1) + (B1.5) + (C2.3), (A1.1) + (B1.6) + (C2.3),
(A1.1) + (B1.7) + (C2.3), (A1.1) + (B1.8) + (C2.3), (A1.1) + (B2.1) + (C2.3),
(A1.1) + (B2.2) + (C2.3), (A1.1) + (B2.3) + (C2.3), (A1.1) + (B2.4) + (C2.3);

(A1.2) + (B1.1) + (C2.3), (A1.2) + (B1.2) + (C2.3), (A1.2) + (B1.3) + (C2.3),
(A1.2) + (B1.4) + (C2.3), (A1.2) + (B1.5) + (C2.3), (A1.2) + (B1.6) + (C2.3),
(A1.2) + (B1.7) + (C2.3), (A1.2) + (B1.8) + (C2.3), (A1.2) + (B2.1) + (C2.3),
(A1.2) + (B2.2) + (C2.3), (A1.2) + (B2.3) + (C2.3), (A1.2) + (B2.4) + (C2.3);

(A1.1) + (B1.1) + (C2.4), (A1.1) + (B1.2) + (C2.4), (A1.1) + (B1.3) + (C2.4),
(A1.1) + (B1.4) + (C2.4), (A1.1) + (B1.5) + (C2.4), (A1.1) + (B1.6) + (C2.4),
(A1.1) + (B1.7) + (C2.4), (A1.1) + (B1.8) + (C2.4), (A1.1) + (B2.1) + (C2.4),
(A1.1) + (B2.2) + (C2.4), (A1.1) + (B2.3) + (C2.4), (A1.1) + (B2.4) + (C2.4);

(A1.2) + (B1.1) + (C2.4), (A1.2) + (B1.2) + (C2.4), (A1.2) + (B1.3) + (C2.4),
(A1.2) + (B1.4) + (C2.4), (A1.2) + (B1.5) + (C2.4), (A1.2) + (B1.6) + (C2.4),
(A1.2) + (B1.7) + (C2.4), (A1.2) + (B1.8) + (C2.4), (A1.2) + (B2.1) + (C2.4),
(A1.2) + (B2.2) + (C2.4), (A1.2) + (B2.3) + (C2.4), (A1.2) + (B2.4) + (C2.4);

(A1.1) + (B1.1) + (C3.1), (A1.1) + (B1.2) + (C3.1), (A1.1) + (B1.3) + (C3.1),
(A1.1) + (B1.4) + (C3.1), (A1.1) + (B1.5) + (C3.1), (A1.1) + (B1.6) + (C3.1),
(A1.1) + (B1.7) + (C3.1), (A1.1) + (B1.8) + (C3.1), (A1.1) + (B2.1) + (C3.1),
(A1.1) + (B2.2) + (C3.1), (A1.1) + (B2.3) + (C3.1), (A1.1) + (B2.4) + (C3.1);

(A1.2) + (B1.1) + (C3.1), (A1.2) + (B1.2) + (C3.1), (A1.2) + (B1.3) + (C3.1),
(A1.2) + (B1.4) + (C3.1), (A1.2) + (B1.5) + (C3.1), (A1.2) + (B1.6) + (C3.1),
(A1.2) + (B1.7) + (C3.1), (A1.2) + (B1.8) + (C3.1), (A1.2) + (B2.1) + (C3.1),
(A1.2) + (B2.2) + (C3.1), (A1.2) + (B2.3) + (C3.1), (A1.2) + (B2.4) + (C3.1);

(A1.1) + (B1.1) + (C3.2), (A1.1) + (B1.2) + (C3.2), (A1.1) + (B1.3) + (C3.2),
(A1.1) + (B1.4) + (C3.2), (A1.1) + (B1.5) + (C3.2), (A1.1) + (B1.6) + (C3.2),
(A1.1) + (B1.7) + (C3.2), (A1.1) + (B1.8) + (C3.2), (A1.1) + (B2.1) + (C3.2),
(A1.1) + (B2.2) + (C3.2), (A1.1) + (B2.3) + (C3.2), (A1.1) + (B2.4) + (C3.2);

(A1.2) + (B1.1) + (C3.2), (A1.2) + (B1.2) + (C3.2), (A1.2) + (B1.3) + (C3.2),
(A1.2) + (B1.4) + (C3.2), (A1.2) + (B1.5) + (C3.2), (A1.2) + (B1.6) + (C3.2),
(A1.2) + (B1.7) + (C3.2), (A1.2) + (B1.8) + (C3.2), (A1.2) + (B2.1) + (C3.2),
(A1.2) + (B2.2) + (C3.2), (A1.2) + (B2.3) + (C3.2), (A1.2) + (B2.4) + (C3.2);

(A1.1) + (B1.1) + (C4), (A1.1) + (B1.2) + (C4), (A1.1) + (B1.3) + (C4),
(A1.1) + (B1.4) + (C4), (A1.1) + (B1.5) + (C4), (A1.1) + (B1.6) + (C4),
(A1.1) + (B1.7) + (C4), (A1.1) + (B1.8) + (C4), (A1.1) + (B2.1) + (C4),
(A1.1) + (B2.2) + (C4), (A1.1) + (B2.3) + (C4), (A1.1) + (B2.4) + (C4);

(A1.2) + (B1.1) + (C4), (A1.2) + (B1.2) + (C4), (A1.2) + (B1.3) + (C4),
(A1.2) + (B1.4) + (C4), (A1.2) + (B1.5) + (C4), (A1.2) + (B1.6) + (C4),
(A1.2) + (B1.7) + (C4), (A1.2) + (B1.8) + (C4), (A1.2) + (B2.1) + (C4),
(A1.2) + (B2.2) + (C4), (A1.2) + (B2.3) + (C4), (A1.2) + (B2.4) + (C4);

(A1.1) + (B1.1) + (C5.1),(A1.1) + (B1.2) + (C5.1),(A1.1) + (B1.3) + (C5.1),
(A1.1) + (B1.4) + (C5.1),(A1.1) + (B1.5) + (C5.1),(A1.1) + (B1.6) + (C5.1),
(A1.1) + (B1.7) + (C5.1),(A1.1) + (B1.8) + (C5.1),(A1.1) + (B2.1) + (C5.1),
(A1.1) + (B2.2) + (C5.1),(A1.1) + (B2.3) + (C5.1),(A1.1) + (B2.4) + (C5.1);

(A1.2) + (B1.1) + (C5.1),(A1.2) + (B1.2) + (C5.1),(A1.2) + (B1.3) + (C5.1),
(A1.2) + (B1.4) + (C5.1),(A1.2) + (B1.5) + (C5.1),(A1.2) + (B1.6) + (C5.1),
(A1.2) + (B1.7) + (C5.1),(A1.2) + (B1.8) + (C5.1),(A1.2) + (B2.1) + (C5.1),
(A1.2) + (B2.2) + (C5.1),(A1.2) + (B2.3) + (C5.1),(A1.2) + (B2.4) + (C5.1);

(A1.1) + (B1.1) + (C6), (A1.1) + (B1.2) + (C6), (A1.1) + (B1.3) + (C6),
(A1.1) + (B1.4) + (C6), (A1.1) + (B1.5) + (C6), (A1.1) + (B1.6) + (C6),
(A1.1) + (B1.7) + (C6), (A1.1) + (B1.8) + (C6), (A1.1) + (B2.1) + (C6),
(A1.1) + (B2.2) + (C6), (A1.1) + (B2.3) + (C6), (A1.1) + (B2.4) + (C6);

(A1.2) + (B1.1) + (C6), (A1.2) + (B1.2) + (C6), (A1.2) + (B1.3) + (C6),
(A1.2) + (B1.4) + (C6), (A1.2) + (B1.5) + (C6), (A1.2) + (B1.6) + (C6),
(A1.2) + (B1.7) + (C6), (A1.2) + (B1.8) + (C6), (A1.2) + (B2.1) + (C6),
(A1.2) + (B2.2) + (C6), (A1.2) + (B2.3) + (C6), (A1.2) + (B2.4) + (C6);

(A1.1) + (B1.1) + (C7), (A1.1) + (B1.2) + (C7), (A1.1) + (B1.3) + (C7),
(A1.1) + (B1.4) + (C7), (A1.1) + (B1.5) + (C7), (A1.1) + (B1.6) + (C7),
(A1.1) + (B1.7) + (C7), (A1.1) + (B1.8) + (C7), (A1.1) + (B2.1) + (C7),
(A1.1) + (B2.2) + (C7), (A1.1) + (B2.3) + (C7), (A1.1) + (B2.4) + (C7);

(A1.2) + (B1.1) + (C7), (A1.2) + (B1.2) + (C7), (A1.2) + (B1.3) + (C7),
(A1.2) + (B1.4) + (C7), (A1.2) + (B1.5) + (C7), (A1.2) + (B1.6) + (C7),
(A1.2) + (B1.7) + (C7), (A1.2) + (B1.8) + (C7), (A1.2) + (B2.1) + (C7),
(A1.2) + (B2.2) + (C7), (A1.2) + (B2.3) + (C7), (A1.2) + (B2.4) + (C7);

(A1.1) + (B1.1) + (C8.1), (A1.1) + (B1.2) + (C8.1), (A1.1) + (B1.3) + (C8.1),
(A1.1) + (B1.4) + (C8.1), (A1.1) + (B1.5) + (C8.1), (A1.1) + (B1.6) + (C8.1),
(A1.1) + (B1.7) + (C8.1), (A1.1) + (B1.8) + (C8.1), (A1.1) + (B2.1) + (C8.1),
(A1.1) + (B2.2) + (C8.1), (A1.1) + (B2.3) + (C8.1), (A1.1) + (B2.4) + (C8.1);

(A1.2) + (B1.1) + (C8.1), (A1.2) + (B1.2) + (C8.1), (A1.2) + (B1.3) + (C8.1),
(A1.2) + (B1.4) + (C8.1), (A1.2) + (B1.5) + (C8.1), (A1.2) + (B1.6) + (C8.1),
(A1.2) + (B1.7) + (C8.1), (A1.2) + (B1.8) + (C8.1), (A1.2) + (B2.1) + (C8.1),
(A1.2) + (B2.2) + (C8.1), (A1.2) + (B2.3) + (C8.1), (A1.2) + (B2.4) + (C8.1).

Dabei sind die oben genannten Aufwandmengenbereiche und Aufwandmengenverhältnisse jeweils bevorzugt. Darüber hinaus kann jede der oben genannten 2er- und 3er-Kombinationen noch einen oder mehrere Safener enthalten, insbesondere einen Safener wie Mefenpyr-diethyl (S1-1), Isoxadifen-ethyl (S1-9), Cloquintocet-mexyl (S2-1) und Cyprosulfamide (S3-1), beispielsweise:
(A1.1) + (B1.1) + (S1-1), (A1.1) + (B1.2) + (S1-1), (A1.1) + (B1.3) + (S1-1),
(A1.1) + (B1.4) + (S1-1), (A1.1) + (B1.5) + (S1-1), (A1.1) + (B1.6) + (S1-1),
(A1.1) + (B1.7) + (S1-1),(A1.1) + (B1.8) + (S1-1), (A1.1) + (B2.1) + (S1-1),
(A1.1) + (B2.2) + (S1-1), (A1.1) + (B2.3) + (S1-1),(A1.1) + (B2.4) + (S1-1);

(A1.1) + (B1.1) + (S1-9), (A1.1) + (B1.2) + (S1-9), (A1.1) + (B1.3) + (S1-9),
(A1.1) + (B1.4) + (S1-9), (A1.1) + (B1.5) + (S1-9), (A1.1) + (B1.6) + (S1-9),
(A1.1) + (B1.7) + (S1-9), (A1.1) + (B1.8) + (S1-9), (A1.1) + (B2.1) + (S1-9),
(A1.1) + (B2.2) + (S1-9), (A1.1) + (B2.3) + (S1-9), (A1.1) + (B2.4) + (S1-9);

(A1.1) + (B1.1) + (S2-1), (A1.1) + (B1.2) + (S2-1), (A1.1) + (B1.3) + (S2-1),
(A1.1) + (B1.4) + (S2-1), (A1.1) + (B1.5) + (S2-1), (A1.1) + (B1.6) + (S2-1),
(A1.1) + (B1.7) + (S2-1), (A1.1) + (B1.8) + (S2-1), (A1.1) + (B2.1) + (S2-1),
(A1.1) + (B2.2) + (S2-1), (A1.1) + (B2.3) + (S2-1), (A1.1) + (B2.4) + (S2-1);

(A1.1) + (B1.1) + (S3-1), (A1.1) + (B1.2) + (S3-1), (A1.1) + (B1.3) + (S3-1),
(A1.1) + (B1.4) + (S3-1), (A1.1) + (B1.5) + (S3-1), (A1.1) + (B1.6) + (S3-1),
(A1.1) + (B1.7) + (S3-1), (A1.1) + (B1.8) + (S3-1), (A1.1) + (B2.1) + (S3-1),
(A1.1) + (B2.2) + (S3-1), (A1.1) + (B2.3) + (S3-1), (A1.1) + (B2.4) + (S3-1);

(A1.2) + (B1.1) + (S1-1),(A1.2) + (B1.2) + (S1-1),(A1.2) + (B1.3) + (S1-1),
(A1.2) + (B1.4) + (S1-1),(A1.2) + (B1.5) + (S1-1),(A1.2) + (B1.6) + (S1-1),
(A1.2) + (B1.7) + (S1-1),(A1.2) + (B1.8) + (S1-1),(A1.2) + (B2.1) + (S1-1),
(A1.2) + (B2.2) + (S1-1),(A1.2) + (B2.3) + (S1-1),(A1.2) + (B2.4) + (S1-1);

(A1.2) + (B1.1) + (S1-9), (A1.2) + (B1.2) + (S1-9), (A1.2) + (B1.3) + (S1-9),
(A1.2) + (B1.4) + (S1-9), (A1.2) + (B1.5) + (S1-9), (A1.2) + (B1.6) + (S1-9),
(A1.2) + (B1.7) + (S1-9), (A1.2) + (B1.8) + (S-19), (A1.2) + (B2.1) + (S1-9),
(A1.2) + (B2.2) + (S1-9), (A1.2) + (B2.3) + (S1-9), (A1.2) + (B2.4) + (S1-9);

(A1.2) + (B1.1) + (S2-1), (A1.2) + (B1.2) + (S2-1), (A1.2) + (B1.3) + (S2-1),
(A1.2) + (B1.4) + (S2-1), (A1.2) + (B1.5) + (S2-1), (A1.2) + (B1.6) + (S2-1),
(A1.2) + (B1.7) + (S2-1), (A1.2) + (B1.8) + (S2-1), (A1.2) + (B2.1) + (S2-1),
(A1.2) + (B2.2) + (S2-1), (A1.2) + (B2.3) + (S2-1), (A1.2) + (B2.4) + (S2-1);

(A1.2) + (B1.1) + (S3-1), (A1.2) + (B1.2) + (S3-1), (A1.2) + (B1.3) + (S3-1),
(A1.2) + (B1.4) + (S3-1), (A1.2) + (B1.5) + (S3-1), (A1.2) + (B1.6) + (S3-1),
(A1.2) + (B1.7) + (S3-1), (A1.2) + (B1.8) + (S3-1), (A1.2) + (B2.1) + (S3-1),
(A1.2) + (B2.2) + (S3-1), (A1.2) + (B2.3) + (S3-1), (A1.2) + (B2.4) + (S3-1);

(A1.1) + (B1.1) + (S1-1) + (C1.1), (A1.1) + (B1.2) + (S1-1) + (C1.1),
(A1.1) + (B1.3) + (S1-1) + (C1.1), (A1.1) + (B1.4) + (S1-1) + (C1.1),
(A1.1) + (B1.5) + (S1-1) + (C1.1), (A1.1) + (B1.6) + (S1-1) + (C1.1),
(A1.1) + (B1.7) + (S1-1) + (C1.1), (A1.1) + (B1.8) + (S1-1) + (C1.1),
(A1.1) + (B2.1) + (S1-1) + (C1.1), (A1.1) + (B2.2) + (S1-1) + (C1.1),
(A1.1) + (B2.3) + (S1-1) + (C1.1), (A1.1) + (B2.4) + (S1-1) + (C1.1);

(A1.1) + (B1.1) + (S1-9) + (C1.1), (A1.1) + (B1.2) + (S1-9) + (C1.1),
(A1.1) + (B1.3) + (S1-9) + (C1.1), (A1.1) + (B1.4) + (S1-9) + (C1.1),
(A1.1) + (B1.5) + (S1-9) + (C1.1), (A1.1) + (B1.6) + (S1-9) + (C1.1),
(A1.1) + (B1.7) + (S1-9) + (C1.1), (A1.1) + (B1.8) + (S1-9) + (C1.1),
(A1.1) + (B2.1) + (S1-9) + (C1.1), (A1.1) + (B2.2) + (S1-9) + (C1.1),
(A1.1) + (B2.3) + (S1-9) + (C1.1), (A1.1) + (B2.4) + (S1-9) + (C1.1);

(A1.1) + (B1.1) + (S2-1) + (C1.1), (A1.1) + (B1.2) + (S2-1) + (C1.1),
(A1.1) + (B1.3) + (S2-1) + (C1.1), (A1.1) + (B1.4) + (S2-1) + (C1.1),
(A1.1) + (B1.5) + (S2-1) + (C1.1), (A1.1) + (B1.6) + (S2-1) + (C1.1),
(A1.1) + (B1.7) + (S2-1) + (C1.1), (A1.1) + (B1.8) + (S2-1) + (C1.1),
(A1.1) + (B2.1) + (S2-1) + (C1.1), (A1.1) + (B2.2) + (S2-1) + (C1.1),
(A1.1) + (B2.3) + (S2-1) + (C1.1), (A1.1) + (B2.4) + (S2-1) + (C1.1);

(A1.1) + (B1.1) + (S3-1) + (C1.1), (A1.1) + (B1.2) + (S3-1) + (C1.1),
(A1.1) + (B1.3) + (S3-1) + (C1.1), (A1.1) + (B1.4) + (S3-1) + (C1.1),
(A1.1) + (B1.5) + (S3-1) + (C1.1), (A1.1) + (B1.6) + (S3-1) + (C1.1),
(A1.1) + (B1.7) + (S3-1) + (C1.1), (A1.1) + (B1.8) + (S3-1) + (C1.1),
(A1.1) + (B2.1) + (S3-1) + (C1.1), (A1.1) + (B2.2) + (S3-1) + (C1.1),
(A1.1) + (B2.3) + (S3-1) + (C1.1), (A1.1) + (B2.4) + (S3-1) + (C1.1);

(A1.2) + (B1.1) + (S1-1) + (C1.1), (A1.2) + (B1.2) + (S1-1) + (C1.1),
(A1.2) + (B1.3) + (S1-1) + (C1.1), (A1.2) + (B1.4) + (S1-1) + (C1.1),
(A1.2) + (B1.5) + (S1-1) + (C1.1), (A1.2) + (B1.6) + (S1-1) + (C1.1),
(A1.2) + (B1.7) + (S1-1) + (C1.1), (A1.2) + (B1.8) + (S1-1) + (C1.1),
(A1.2) + (B2.1) + (S1-1) + (C1.1), (A1.2) + (B2.2) + (S1-1) + (C1.1),
(A1.2) + (B2.3) + (S1-1) + (C1.1), (A1.2) + (B2.4) + (S1-1) + (C1.1);

(A1.2) + (B1.1) + (S1-9) + (C1.1), (A1.2) + (B1.2) + (S1-9) + (C1.1),
(A1.2) + (B1.3) + (S1-9) + (C1.1), (A1.2) + (B1.4) + (S1-9) + (C1.1),
(A1.2) + (B1.5) + (S1-9) + (C1.1), (A1.2) + (B1.6) + (S1-9) + (C1.1),
(A1.2) + (B1.7) + (S1-9) + (C1.1), (A1.2) + (B1.8) + (S1-9) + (C1.1),
(A1.2) + (B2.1) + (S1-9) + (C1.1), (A1.2) + (B2.2) + (S1-9) + (C1.1),
(A1.2) + (B2.3) + (S1-9) + (C1.1), (A1.2) + (B2.4) + (S1-9) + (C1.1);

(A1.2) + (B1.1) + (S2-1) + (C1.1), (A1.2) + (B1.2) + (S2-1) + (C1.1),
(A1.2) + (B1.3) + (S2-1) + (C1.1), (A1.2) + (B1.4) + (S2-1) + (C1.1),
(A1.2) + (B1.5) + (S2-1) + (C1.1), (A1.2) + (B1.6) + (S2-1) + (C1.1),
(A1.2) + (B1.7) + (S2-1) + (C1.1), (A1.2) + (B1.8) + (S2-1) + (C1.1),
(A1.2) + (B2.1) + (S2-1) + (C1.1), (A1.2) + (B2.2) + (S2-1) + (C1.1),
(A1.2) + (B2.3) + (S2-1) + (C1.1), (A1.2) + (B2.4) + (S2-1) + (C1.1);

(A1.2) + (B1.1) + (S3-1) + (C1.1), (A1.2) + (B1.2) + (S3-1) + (C1.1),
(A1.2) + (B1.3) + (S3-1) + (C1.1), (A1.2) + (B1.4) + (S3-1) + (C1.1),
(A1.2) + (B1.5) + (S3-1) + (C1.1), (A1.2) + (B1.6) + (S3-1) + (C1.1),
(A1.2) + (B1.7) + (S3-1) + (C1.1), (A1.2) + (B1.8) + (S3-1) + (C1.1),
(A1.2) + (B2.1) + (S3-1) + (C1.1), (A1.2) + (B2.2) + (S3-1) + (C1.1),
(A1.2) + (B2.3) + (S3-1) + (C1.1), (A1.2) + (B2.4) + (S3-1) + (C1.1).

Die erfindungsgemäßen Herbizid-Kombinationen (= herbiziden Mittel) weisen eine ausgezeichnete herbizide Wirksamkeit gegen ein breites Spektrum wirtschaftlich wichtiger Schadpflanzen auf. Dabei können die Substanzen im Vorsaat-, Vorauflauf- und/oder Nachauflaufverfahren ausgebracht werden, z.B. gemeinsam oder getrennt. Bevorzugt ist die Anwendung im Nachauflaufverfahren oder im frühen Vorauflaufverfahren.

Im einzelnen seien beispielhaft einige Vertreter der dikotylen Unkrautflora genannt, die durch die erfindungsgemäßen Kombinationen kontrolliert werden können, ohne daß durch die Nennung eine Beschränkung auf bestimmte Arten erfolgen soll: Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern, sowie Acacia spp., Acalypha acalopecurus, Ageratum conyzoides, Ammis majus, Apium leptophyllium, Asclepias curassavica, Baccharis coridifolia, Bauhinia spp. , Baltimora recta, Boehmeria niveam, Bowlesia incana, Cassia occidentalis, Carduus acanthoides, Cassia tora, Chamaecrysta trichopoda, Cirsium vulgare, Cleome viscosa, Clidemia Hirta, Conyza bonariensis , Coronopus didimus, Crotalaria spp., Eclipta alba, Elephantopus spicatus, Eupatorium squalidum, Euphorbia spp. Fumaria capriolata, Fumaria officinalis, Gamochaeta spicata, Gnaphallium spp., Heliconia bijai, Hyptis suaveolens, Lantana camara, Lippia nudiflora, Ludwigia octovalvis, Malva spp., Melampodium spp., Mimosa spp., Mucuna pririens, Nephrolepsis spp., Pachira odorata, Petiveria alleacea, Phitecollobium spp , Pisonia aculeata , Plantago lanceolata, Plantago major, Priva lapulacea, Prosopis juliflora, Pteridium aquilinum, Rauvolfia tetraphilla , Ricinus comunis, Scleria pterota, Senecio brasiliensis, Senna obtusifolia, Silibum marianun, Tecoma stans, Thalia geniculata ,
Vernonia spp., Viguiera dentata, Wissadula amplissima.

Werden die erfindungsgemäßen Herbizid-Kombinationen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den Kombinationen verwendeten und wirksamen Dosierungen von Verbindungen (A) und (B) so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Herbizid-Kombination wird eine erhebliche Reduzierung der nötigen Aufwandmenge der Wirkstoffe ermöglicht.

Bei der gemeinsamen Anwendung von Herbiziden des Typs (A)+(B) treten in bevorzugter Ausführungsform überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Obgleich die erfindungsgemäßen Kombinationen eine ausgezeichnete herbizide Aktivität gegenüber Schadpflanzen aufweisen, werden die Kulturpflanzen nur unwesentlich oder gar nicht geschädigt.

Darüberhinaus weisen die erfindungsgemäßen Kombinationen teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da Ernteverluste beim Lagern hierdurch verringert oder völlig verhindert werden können.

Aufgrund ihrer herbiziden und pflanzenwachstumsregulatorischen Eigenschaften können die erfindungsgemäßen Kombinationen auch zur Bekämpfung von Schadpflanzen in gentechnisch veränderten oder durch Mutationsselektion erhaltenen Kulturpflanzen eingesetzt werden. Diese Kulturpflanzen zeichnen sich in der Regel durch besondere vorteilhafte Eigenschaften aus, wie Resistenzen gegenüber herbiziden Mitteln oder Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind z.B. transgene Pflanzen mit erhöhtem Stärkegehalt oder veränderter Qualität der Stärke oder solche mit anderer Fettsäurezusammensetzung des Ernteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten (siehe z.B. US 5,162,602; US 4,761,373; US 4,443,971). Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen
- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind. Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der vorliegenden Erfindung ist weiterhin ein Verfahren zur Bekämpfung von unerwünschtem Pflanzenwuchs, vorzugsweise in Pflanzenkulturen wie monokotylen oder dikotylen Pflanzenkulturen, z.B. Weidekulturen, Getreide (z.B. Weizen, Gerste, Roggen, Hafer, Reis, Mais, Hirse), Zuckerrübe, Zuckerrohr, Raps, Baumwolle und Soja, bevorzugt in monokotylen Kulturen wie Weidekulturen oder Getreide (z.B. Weizen, Gerste, Roggen, Hafer, Reis, Mais und Hirse), wobei man ein oder mehrere Herbizide des Typs (A) mit einem oder mehreren Herbiziden des Typs (B), gemeinsam oder getrennt auf die Schadpflanzen, Pflanzenteile, Pflanzensamen oder die Fläche auf der die Pflanzen wachsen, z.B. die Anbaufläche oder die Weidefläche appliziert.

Besonders bevorzugt ist der Einsatz der erfindungsgemäßen Herbizid-Kombinationen in Weidekulturen, insbesondere Graskulturen wie nativen perennierenden Gras spp., Brachiaria (brizantha, ruziziensis, decumbens), Panicum maximum, Cynodon plesctostachyum, Andropogum gayanus, Dichantium Aristatum, Digitaria decumbens (Pangola), Panicum maximum, Medicago sativa (Alfalfa), Trifolium pratense, Trifolium repens, Melilotus officinalis, Lotus corniculatus, Lotus tenuis, Bromus unioloides, Colium spp. une, Lolium multiflorum oder Lolium perenne, Festuca arundinacea, Dactylis glomerata, Phalaris bulbosa, Agropirum repens.

Die Pflanzenkulturen können auch gentechnisch verändert oder durch Mutationsselektion erhalten sein und sind bevorzugt tolerant gegenüber Acetolactatsynthase (ALS)-Inhibitoren.

Gegenstand der Erfindung ist auch die Verwendung der erfindungsgemäßen Herbizid-Kombinationen zur Bekämpfung von Schadpflanzen, vorzugsweise in Pflanzenkulturen.

Die erfindungsgemäßen Herbizid-Kombinationen können sowohl als Mischformulierungen der Komponenten (A) und (B), gegebenenfalls mit weiteren agrochemischen Wirkstoffen, Zusatzstoffen und/oder üblichen Formulierungshilfsmitteln vorliegen, die dann in üblicher Weise z.B. mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Komponenten (A) und (B) oder deren Kombinationen können auf verschiedene Art formuliert werden, je nachdem welche biologischen und/oder chemischphysikalischen Parameter vorgegeben sind. Als allgemeine Formulierungsmöglichkeiten kommen beispielsweise in Frage: Spritzpulver (WP), wasserlösliche Konzentrate, emulgierbare Konzentrate (EC), wäßrige Lösungen (SL), Emulsionen (EW) wie Öl-in-Wasser- und Wasser-in-ÖI-Emulsionen, versprühbare Lösungen oder Emulsionen, Suspensionskonzentrate (SC), Dispersionen auf Öl- oder Wasserbasis wie Ölsuspensionskonzentrate (OD), Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticide Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen agrochemischen Wirkstoffen, wie anderen Herbiziden, Fungiziden, Insektiziden, sowie Safenern, Düngemitteln und/oder Wachstumsregulatoren herstellen, z.B. in Form einer Fertigformulierung oder als Tankmischung.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Suspensionskonzentrate (SC) können auf Wasser- oder Ölbasis sein. Sie können beispielsweise durch Naß-Vermahlung mittels handelsüblicher Perlmühlen und gegebenenfalls Zusatz von weiteren Tensiden, wie sie z.B. oben bei den anderen Formulierungstypen bereits aufgeführt sind, hergestellt werden.

Emulsionen, z.B. ÖI-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls von weiteren Tensiden, wie sie z.B. oben bei den anderen Formulierungstypen bereits aufgeführt sind, herstellen.

Granulate können entweder durch Verdüsen des Wirkstoffs auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischern und Extrusion ohne festes Inertmaterial hergestellt. Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Bevorzugt werden die erfindungsgemäßen Herbizid-Kombinationen in Form eines Ölsuspensionskonzentrats (OD) formuliert. Die Ölsuspensionskonzentrate, enthalten beispielsweise
a) mindestens eines der Herbizide (A) und (B), in suspendierter Form,
b) ein oder mehrere organische Lösungsmittel,
c) optional ein oder mehrere Sulfosuccinate,
d) optional einen oder mehrere von a) verschiedene agrochemische Wirkstoffe,
e) optional ein oder mehrere anorganische Salze, und
f) optional übliche Hilfs- und Zusatzstoffe.

Unter dem Begriff Ölsuspensionskonzentrat (OD) wird ein Suspensionskonzentrat auf Basis organischer Lösungsmittel verstanden. Dabei sind einer oder mehrere Wirkstoffe in dem organischen Lösungsmittel suspendiert, weitere Wirkstoffe können in dem organischen Lösungsmittel gelöst sein.

Die herbiziden Wirkstoffe a) sind in den erfindungsgemäßen Ölsuspensionskonzentraten im allgemeinen in Mengen von 0,01 bis 50 Gew.-%, bevorzugt 0,1 bis 30 Gew.-% enthalten, dabei bezieht sich die Angabe "Gew.-%" hier und in der gesamten Beschreibung, wenn nicht anders definiert, auf das relative Gewicht der jeweiligen Komponente bezogen auf das Gesamtgewicht der Formulierung. Als Herbizide a) sind bevorzugt suspendiert (A1.1) und (A1.2), die freien Säuren und Salze von (B1) und (B2) sowie (C1), (C4), (C5), (C7), (C8) und die freien Säuren von (C2) und (C3).

Als organische Lösungsmittel (Komponente b) kommen z.B. in Frage:
1) Kohlenwasserstoffe, die unsubstituiert oder substituiert sein können, z.B.
   1a) aromatische Kohlenwasserstoffe, z.B.
      - ein- oder mehrfach alkyl-substituierte Benzole wie Toluol, Xylole, Mesitylen, Ethylbenzol, oder
      - ein- oder mehrfach alkyl-substituierte Naphthaline wie 1-Methylnaphthalin, 2-Methylnaphthalin oder Dimethylnaphthalin, oder
      - andere vom Benzol abgeleitete aromatische Kohlenwasserstoffe, wie Indan oder Tetralin^{®}, oder
      - Gemische hieraus,
   1b) aliphatische Kohlenwasserstoffe, z.B.
      - lineare oder verzweigte Aliphaten, z.B. der allgemeinen Formel CₙH₂ₙ₊₂, wie Pentan, Hexan, Octan, 2-Methylbutan oder 2,2,4-Trimethylpentan, oder
      - cyclische, gegebenenfalls alkyl-substituierte Aliphaten, wie Cyclohexan oder Methylcyclopentan, oder
      - Gemische hieraus, wie Lösungsmittel der Exxsol^{®}D-Reihe, Isopar^{®}-Reihe oder Bayol^{®}-Reihe z.B. Bayol^{®}82 (ExxonMobil Chemicals) oder der Isane^{®}IP-Reihe oder Hydroseal^{®}G-Reihe (TotalFinaElf),
   1c) Gemische von aromatischen und aliphatischen Kohlenwasserstoffen, wie Lösungsmittel der Solvesso^{®}-Reihe z.B. Solvesso^{®}100, Solvesso^{®}150 oder Solvesso^{®}200 (ExxonMobil Chemicals), der Solvarex^{®}/Solvaro^{®}-Reihe (TotalFinaElf) oder der Caromax^{®}-Reihe z.B. Caromax^{®}28 (Petrochem Carless), oder
   1d) halogenierte Kohlenwasserstoffe wie halogenierte aromatische und aliphatische Kohlenwasserstoffe, wie Chlorbenzol oder Methylenchlorid, oder
2) polare Lösungsmittel, z.B. aprotische, polare Lösungsmittel, wie Vollether und Vollester von C₁-C₉-Alkansäuren, die mono-, di- oder polyfunktional sein können, z.B. die Ether und Ester mit C₁-C₁₈-Alkylalkoholen, Ketone mit geringer Tautomerietendenz, Phophorsäureester, Amide, Nitrile oder Sulfone, z.B. Diisobutyladipat, Rhodiasolv^{®} RPDE (Rhodia), Cyclohexanon, Jeffsol^{®}PC (Huntsman), γ-Butyrolacton, N-Methylpyrrolidon, Dimethylsulfoxid, Acetonitril, Tributylphosphatam oder Hostarex^{®}PO-Reihe (Clariant), oder protische polare Lösungsmittel wie Alkohole, Amine oder Carbonsäuren. Die Alkohole, Amine oder Carbonsäuren, weisen bevorzugt 1 bis 18 C-Atome auf und können linear, verzweigt oder cyclisch, gesättigt oder ungesättigt sein, gegebenenfalls Heteroatome enthalten und ein- oder mehrfach funktionalisiert sein. Beispiele für Alkohole sind monofunktionelle C₁-C₁₀-Alkohole wie Methanol, Ethanol, Propanol, Isopropanol, Heptanol, Octanol, Isooctanol oder Phenol, oder Polyole wie Glycerin oder Polygykole, kommerziell z.B. erhältlich als Exxal^{®}-Reihe (ExxonMobil), Agrisynth^{®} PA (ISP), Arcosolv^{®}-Reihe (Lyondell Chemical) oder Nacol^{®} 6-98 (DEA). Beispiele für Amine sind Diethylamin, Hexylamin oder Anilin. Beispiele für Carbonsäuren sind Adipinsäure und Adipinsäuremonoester.
3) Fettsäureester, z.B. natürlichen Ursprungs, z.B. natürliche Öle wie tierische Öle oder Pflanzenöle, oder synthetischen Ursprungs, z.B. Edenor^{®}-Reihe z.B. Edenor^{®}MEPa oder Edenor^{®}MESU oder Agnique^{®}ME-Reihe oder Agnique^{®}AE-Reihe (Cognis), Salim^{®}ME-Reihe (Salim), Radia^{®}-Reihe z.B. Radia^{®}30167 (ICI), Prilube^{®}-Reihe z.B. Prilube^{®}1530 (Petrofina), Stepan^{®}C-Reihe (Stepan) oder Witconol^{®}23-Reihe (Witco). Die Fettsäureester sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.
   Beispiele für Fettsäureester wie C₁₀-C₂₂-Fettsäure-Ester sind Glycerin- und Glykolester von Fettsäuren wie C₁₀-C₂₂-Fettsäuren oder deren Umesterungsprodukte, z.B. Alkyl-Fettsäureester wie C₁-C₂₀-Alkyl-C₁₀-C₂₂-Fettsäure-Ester, wie sie z.B. durch Umesterung der vorgenannten Glycerin- oder Glykol-Fettsäureester wie C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.
   Als Alkyl-Fettsäureester wie C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-Fettsäureester wie C₁₀-C₂₂-FettsäureEster bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

Tierische Öle b) sind allgemein bekannt und kommerziell erhältlich. Unter dem Begriff tierische Öle im Sinne der vorliegenden Erfindung werden z.B. Öle tierischen Ursprungs verstanden wie Waltranöl, Lebertranöl, Moschusöl oder Nerzöl.

Pflanzenöle b) sind allgemein bekannt und kommerziell erhältlich. Unter dem Begriff Pflanzenöle im Sinne der vorliegenden Erfindung werden z.B. Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl verstanden, wobei unter den Pflanzenölen auch deren Umesterungsprodukte verstanden werden, z.B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren,insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Pflanzenöle sind C₁₀-C₂₂-Fettsäure-Ester von Glycerin oder Glykol mit den C₁₀-C₂₂-Fettsäuren,oder C₁-C₂₀-Alkyl-C₁₀-C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Die Pflanzenöle können in den erfindungsgemäßen Ölsuspensionskonzentraten z.B. in Form kommerziell erhältlicher Pflanzenöle, insbesondere Rapsöle wie Rapsölmethylester, z.B. Phytorob®B (Novance, Frankreich), Edenor® MESU und Agnique®ME-Reihe (Cognis, Deutschland) Radia^{®}-Reihe (ICI), Prilube^{®}-Reihe (Petrofina) oder Biodiesel oder in Form kommerziell erhältlicher pflanzenölhaltiger Formulierungszusatzstoffe, insbesondere solcher auf Basis von Rapsölen wie Rapsölmethylester, z.B. Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Beispiele für synthetische Fettsäureester sind z.B. solche die sich von Fettsäuren mit ungerader Kohlenstoffatomanzahl ableiten, wie C"-C₂,-Fettsäureester. Bevorzugte organische Lösungsmittel sind aromatische Kohlenwasserstoffe, aliphatische Kohlenwasserstoffe und Fettsäureester wie pflanzliche Öle wie Triglyceride von Fettsäuren mit 10 bis 22 C-Atomen, die sowohl gesättigt als auch ungesättigt, linear oder verzweigt sein können und gegebenenfalls weitere funktionelle Gruppen tragen, wie Maiskeimöl, Rapsöl, Sonnenblumenkernöl, Baumwollsaatöl, Leinöl, Sojaöl, Kokosöl, Palmöl, Distelöl oder Rizinusöl, und deren Umesterungsprodukte wie Fettsäurealkylester, sowie Mischungen hieraus.

Die Lösungsmittel können allein oder im Gemisch enthalten sein. Der Gesamtlösungsmittelanteil in den erfindungsgemäßen Ölsuspensionskonzentraten liegt im allgemeinen zwischen 5 und 95 Gew.-%, bevorzugt im Bereich zwischen 20 und 80 Gew.-%. Der Anteil an polaren Lösungsmitteln wie aprotischen, polaren liegt im allgemeinen unter 20 Gew.-%, bevorzugt im Bereich von 0 bis 10 Gew.-%.

Die in den erfindungsgemäßen Ölsuspensionskonzentraten optional enthaltenen Sulfosuccinate (Komponente c) können z.B. Mono- oder Diester der Sulfobernsteinsäure sein, vorzugsweise solche der allgemeinen Formel (III)

R¹-(X₁)ₙ-O-CO-CH₂-CH(SO₃M)-CO-O-(X₂)ₘ-R² (III)

, worin
- R¹: H oder ein unsubstituierter oder substituierter C₁-C₃₀-Kohlenwasserstoffrest wie C₁-C₃₀-Alkyl oder C₇-C₃₀-Alkylaryl bedeutet,
- R²: H oder ein unsubstituierter oder substituierter C₁-C₃₀-Kohlenwasserstoffrest wie C₁-C₃₀-Alkyl oder C₇-C₃₀-Alkylaryl bedeutet, oder ein Kation ist, z.B. ein Metallkation wie ein Alkali- oder Erdalkalimetallkation, oder ein Ammoniumkation wie NH₄, Alkyl-, Alkylaryl- oder Poly(arylalkyl)phenylammoniumkation,
- X¹, X²: unabhängig voneinander gleich oder verschieden eine Spacereinheit wie eine Polyethereinheit oder eine Polyestereinheit bedeuten,
- n,m: unabhängig voneinander gleich oder verschieden Null oder 1 sind, vorzugsweise Null sind, und
- M: ein Kation ist, z.B. ein Metallkation wie ein Alkali- oder Erdalkalimetallkation, oder ein Ammoniumkation wie NH₄, Alkyl-, Alkylaryl- oder Poly(arylalkyl)phenyl-ammoniumkation.

Bevorzugt sind Sulfosuccinate der Formel (III), worin R¹ und R² unabhängig voneinander gleich oder verschieden lineare, verzweigte oder cyclische, gesättigte oder ungesättigte C₁-C₂₀- vorzugsweise C₄-C₁₈-Alkylreste sind, wie Methyl-, Ethyl-, Butyl-, Hexyl-, Cyclohexyl-, Octyl wie 2-Ethylhexyl-, Decyl-, Tridecyl- oder Octadecyl-Reste, oder R¹ und R² sind C₇-C₂₀-Alkylarylreste, wie Nonylphenyl, 2,4,6-Tri-*sec*-butylphenyl, 2,4,6-Tris-(1-phenylethyl)-phenyl, Alkylbenzyl oder ein Hydrozimtrest,
X₁ und X₂ unabhängig voneinander gleich oder verschieden Polyethereinheiten sind, wie Polyethylenglykole -(C₂H₄O)ₚ- oder Polypropylenglykole -(C₃H₆O)ₚ- mit p=1 bis p=20, insbesondere p=1 bis p=12, oder Polyestereinheiten sind, wie Polyhydroxybuttersäure -(CH[CH₃]-CH₂-COO)_{q}- oder Polymilchsäure -(CH[CH₃]-COO)q- mit q=1 bis q=15, insbesondere q=1 bis q=8,
n, m unabhängig voneinander gleich oder verschieden Null oder 1 sind, vorzugsweise Null sind, und M ein Kation ist, z.B. ein Metallkation, wie Alkali- oder Erdalkalimetallkation, oder ein Ammoniumkation, welches alkyl-substituiert sein kann.

Erfindungsgemäß enthaltene Sulfosuccinate sind, beispielsweise
a1) ein- oder zweifach mit linearen, cyclischen oder verzweigten aliphatischen, cycloaliphatischen und/oder aromatischen Alkoholen verestertes Sulfosuccinat, beispielsweise mit 1 bis 22 C-Atomen im Alkylrest, vorzugsweise ein- oder zweifach mit Methanol, Ethanol, (Iso)propanol, (Iso)butanol, (Iso)pentanol, (Iso)hexanol, Cyclohexanol, (Iso)heptanol, (Iso)octanol (insbesondere: Ethylhexanol), (Iso)nonanol, (Iso)decanol, (Iso)undecanol, (Iso)dodecanol oder (Iso)tridecanol verestertes Mono- oder Dialkalisulfosuccinat, insbesondere Mono- oder Dinatriumsulfosuccinat,
a2) ein- oder zweifach mit (Poly) Alkylenoxidaddukten von Alkoholen verestertes Sulfosuccinat, beispielsweise mit 1 bis 22 C-Atomen im Alkylrest und 1 bis 200, vorzugsweise 2 bis 200 Alkylenoxideinheiten im (Poly) Alkylenoxidanteil, vorzugsweise ein- oder zweifach mit Dodecyl/Tetradecyl-Alkohol + 2-5 mol Ethylenoxid oder mit i-Tridecyl+3mol Ethylenoxid verestertes Mono- oder Dialkalisulfosuccinat, insbesondere Mono- oder Dinatriumsulfosuccinat,
a3) das Dialkali, vorzugsweise das Dinatriumsalz von einfach mit Aminen oder aminoterminierten (Poly) Alkylenoxidaddukten von Alkoholen, Aminen, Fettsäuren, Estern oder Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alkylenoxy-Einheiten im (Poly) Alkylenoxidteil, vorzugsweise das Dinatriumsalz von einfach mit Kokosfettamin umgesetztem und nachfolgend sulfoniertem Maleinsäureanhydrid,
a4) das Dialkali, vorzugsweise das Dinatriumsalz von einfach mit Amiden oder (Poly) Alkylenoxidaddukten von Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alykylenoxy-Einheiten im (Poly) Alkylenoxidteil, vorzugsweise das Dinatriumsalz von einfach mit Oleylamid + 2 mol Ethylenoxid umgesetztem und nachfolgend sulfoniertem Maleinsäureanhydrid und/oder
a5) das Tetraalkali, vorzugsweise das Tetranatriumsalz von N-(1,2-dicarboxyethyl-)-N-Octadecylsulfo-succinamat.

Beispiele kommerziell erhältlicher und im Rahmen der vorliegenden Erfindung bevorzugter Sulfosuccinate der Gruppen a1) bis a5) sind nachfolgend aufgeführt:
a1) Natrium-Dialkylsulfosuccinat, z.B. Natrium-Di(C₄-C₁₈)alkylsulfosuccinat wie Natrium-Diisooctylsulfosuccinat, vorzugsweise Natrium-Di(2-ethylhexyl)sulfosuccinat, kommerziell beispielsweise in Form der Aerosol^{®}-Marken (Cytec), der Agrilan^{®}- oder Lankropol^{®}-Marken (Akzo Nobel), der Empimin^{®}-Marken (Albright&Wilson), der Cropol^{®}-Marken (Croda), der Lutensit^{®}-Marken (BASF) der Triton^{®}-Marken (Union Carbide), der Geropon^{®}-Marken (Rhodia) oder der Imbirol^{®}-, Madeol^{®}- oder Polirol^{®}-Marken (Cesalpinia) erhältlich,
a2) Natrium- Alkoholpolyethylenglykolethersulfosuccinat, kommerziell beispielsweise in Form von Geropon^{®} ACR-Marken (Rhodia) erhältlich,
a3) Dinatrium-Alkoholpolyethylenglykolethersemisulfosuccinat, kommerziell beispielsweise in Form der Aerosol^{®}-Marken (Cytec), der Marlinat^{®}- oder Sermul^{®}-Marken (Condea), der Empicol^{®}-Marken (Albright&Wilson), der Secosol^{®}-Marken (Stepan), der Geropon^{®}-Marken (Rhodia), der Disponil^{®}- oder Texapon^{®}-Marken (Cognis) oder der Rolpon^{®}-Marken (Cesalpinia) erhältlich,
a4) Dinatrium-N-Alkylsulfosuccinamat, kommerziell beispielsweise in Form der Aerosol^{®}-Marken (Cytec), der Rewopol^{®}- oder Rewoderm^{®}-Marken (Rewo), der Empimin^{®}-Marken (Albright&Wilson), der Geropon^{®}-Marken (Rhodia) oder der Polirol^{®}-Marken (Cesalpinia) erhältlich,
a5) Dinatrium-Fettsäureamidpolyethylenglykolethersemisulfosuccinat, kommerziell beispielsweise in Form der Elfanol^{®}- oder Lankropol^{®}-Marken (Akzo Nobel), der Rewoderm^{®}-, Rewocid^{®}- oder Rewopol^{®}-Marken (Rewo), der Emcol^{®}-Marken (Witco), der Standapol^{®}-Marken (Cognis) oder der Rolpon^{®}-Marken (Cesalpinia) erhältlich, und
a6) Tetranatrium-N-(1,2-dicarboxyethyl)-N-Octadecyl-sulfosuccinamat, kommerziell beispielsweise in Form von Aerosol 22^{®}- (Cytec) erhältlich.

Kommerziell sind Sulfosuccinate zum Beispiel als Aerosol^{®}- (Cytec), Agrilan^{®}- oder Lankropol^{®}- (Akzo Nobel), Empimin^{®}- (Huntsman), Cropol^{®}- (Croda), Lutensit^{®}-(BASF), Triton^{®}GR-Reihe (UnionCarbide), Imbirol^{®}-/Madeol^{®}-/Polirol^{®}- (Cesalpinia); Geropon^{®}AR-Reihe oder Geropon^{®}SDS (Rhodia) erhältlich.

Bevorzugte Sulfosuccinate sind z.B. die Natrium-, Kalium- und Ammoniumsalze von Bis(alkyl)sulfosuccinaten, wobei die Alkylreste gleich oder verschieden 4 bis 16 Kohlenstoffatome enthalten, und bevorzugt Butyl-, Hexyl-, Octyl- wie 2-Ethylhexyl- oder Decyl-Reste sind, die linear oder verzweigt sein können. Besonders bevorzugt ist Di(C₄-C₁₀-alkyl)sulfosuccinat Natrium wie Di(2-Ethylhexyl)sulfosuccinat Natrium.

Soweit in den erfindungsgemäßen Ölsuspensionskonzentraten Sulfosuccinate d) enthalten sind, beträgt deren Gewichtsanteil im allgemeinen 0,5 bis 60 Gew.-%, insbesondere 1 bis 30 Gew.-%.

Als optionale agrochemische Wirkstoffe d) können beispielsweise von Komponente a) verschiedene agrochemische Wirkstoffe wie Herbizide, Fungizide, Insektizide, Safener oder Pflanzenwachstumsregulatoren enthalten sein. Die agrochemischen Wirkstoffe d) können in dem organischen Lösungsmittel in suspendierter und/oder gelöster Form vorliegen. In gelöster Form liegen insbesondere die Ester der Herbizide (B1) und (B2) vor. Von den Wirkstoffen (C) liegen insbesondere die Ester der Herbizide (C2), (C3), (C6) sowie der Safener (S1-1) in gelöster Form vor.

Bei den in den erfindungsgemäßen Ölsuspensionskonzentraten optional enthaltenen anorganischen Salzen (Komponente e) handelt es sich vorzugsweise um basische anorganische Salze. Hierunter werden Salze verstanden, welche in 1 %iger wässriger Lösung einen pH-Wert > 7 aufweisen, vorzugsweise schwach basische Salze mit einem pH-Wert zwischen 7 und 11. Beispiele solcher Salze sind Carbonate, Hydrogencarbonate, Hydroxide, Oxide, Hypochlorite und Sulfite, bevorzugt Carbonate und Hydrogencarbonate. Als Kationen enthalten die anorganischen Salze bevorzugt Metallionen, insbesondere Alkali-, Erdalkali- und Übergangsmetallionen, vorzugsweise Alkali- und Erdalkalimetallionen wie Natrium, Kalium, Magnesium oder Calcium. Besonders bevorzugte Salze sind Alkalimetallsalze, insbesondere Alkalimetallcarbonate und Alkalimetallhydrogencarbonate wie Na₂CO₃, K₂CO₃, NaHCO₃ und KHCO₃. Die anorganischen Salze können allein oder im Gemisch enthalten sein.

Soweit in den erfindungsgemäßen Ölsuspensionskonzentraten anorganische Salze e) enthalten sind, beträgt deren Gewichtsanteil im allgemeinen 0,01 bis 20 Gew.-%, bevorzugt 0,01 bis 10 Gew.-%, besonders bevorzugt 0,05 bis 5 Gew.-%.

Als übliche Hilfs- und Zusatzstoffe (Komponente f)) können in den erfindungsgemäßen Ölsuspensionskonzentraten z.B. noch enthalten sein: Tenside wie Emulgatoren und Dispergatoren, Verdickungs- und Thixotropiermittel, Netz-, Anti-Drift-, Haft-, Penetrations-, Konservierungs- und Frostschutzmittel, Antioxidantien, Lösungsvermittler, Füll-, Träger- und Farbstoffe, Entschäumer, Düngemittel, Verdunstungshemmer, sowie den pH-Wert und die Viskosität beeinflussende Mittel.

Als Emulgatoren und Dispergatoren kommen z.B. nichtionische Emulgatoren und Dispergatoren in Frage, z.B.:
1) polyalkoxylierte, vorzugsweise polyethoxylierte, gesättigte und ungesättigte aliphatische Alkohole,
   - mit 8 bis 24 C-Atomen im Alkylrest, der sich von den entsprechenden Fettsäuren oder aus petrochemischen Produkten ableitet, und
   - mit 1 bis 100, vorzugsweise 2 bis 50, Ethylenoxideinheiten (EO), wobei die freie Hydroxy-Gruppe gegebenenfalls alkoxyliert ist,
   - die z. B. kommerziell als Genapol^{®}X- und Genapol^{®}O-Reihe (Clariant), Crovol^{®}M-Reihe (Croda) oder Lutensol^{®}Reihe (BASF) erhältlich sind,
2) polyalkoxylierte, vorzugsweise polyethoxylierte Arylalkylphenole, wie z. B. 2,4,6-Tris-(1-phenylethyl)-phenol (Tristyrylphenol) mit einem mittleren Ethoxylierungsgrad zwischen 10 und 80, bevorzugt 16 bis 40, wie z. B. Soprophor^{®}BSU (Rhodia) oder HOE S 3474 (Clariant),
3) polyalkoxylierte, vorzugsweise polyethoxylierte Alkylphenole mit einem oder mehreren Alkylresten, wie z. B. Nonylphenol oder Tri-*sec*-butylphenol, und einem Ethoxylierungsgrad zwischen 2 und 40, bevorzugt 4 bis 15, wie z. B. Arkopal^{®}N-Reihe oder Sapogenat^{®}T-Reihe (Clariant),
4) polyalkoxylierte, vorzugsweise polyethoxylierte Hydroxyfettsäuren oder Hydroxyfettsäuren enthaltene Glyceride, wie z. B. Ricinin bzw. Rizinusöl, mit einem Ethoxylierungsgrad zwischen 10 und 80, bevorzugt 25 bis 40, wie z. B. Emulsogen^{®}EL-Reihe (Clariant) oder Agnique^{®}CSO-Reihe (Cognis),
5) polyalkoxylierte, vorzugsweise polyethoxylierte Sorbitanester, wie z. B. Atplus^{®}309 F (Uniqema) oder Alkamuls^{®}-Reihe (Rhodia),
6) polyalkoxylierte, vorzugsweise polyethoxylierte Amine, wie z.B. Genamin^{®}-Reihe (Clarian), Imbentin^{®} CAM - Reihe (Kolb) oder Lutensol^{®} FA - Reihe (BASF),
7) Di- und Tri-block-copolymere, z.B. aus Alkylenoxiden, z.B. aus Ethylen- und Propylenoxid mit mittleren Molmassen zwischen 200 und 10000, vorzugsweise 1000 bis 4000 g/mol, wobei der Massenanteil des polyethoxylierte Blocks zwischen 10 und 80% variiert, wie z. B. Genapol^{®}PF-Reihe (Clariant), Pluronic^{®}-Reihe (BASF), oder Synperonic^{®}PE-Reihe (Uniqema),

Bevorzugte nichtionische Emulgatoren und Dispergatoren sind z.B. polyethoxylierte Alkohole, polyethoxylierte Triglyceride, die Hydroxyfettsäuren enthalten und Polyethylenoxid-Polypropylenoxid-Block-Copolymere.

Soweit in den erfindungsgemäßen Ölsuspensionskonzentraten nichtionischen Emulgatoren und Dispergatoren enthalten sind, beträgt deren Gewichtsanteil im allgemeinen zwischen 1 und 20 Gew.-%.

Es kommen auch ionische Emulgatoren und Dispergatoren in Frage, z.B.:
1) polyalkoxylierte, vorzugsweise polyethoxylierte Emulgatoren/Dispergatoren (vgl. Komponente e), die ionisch modifiziert sind, z. B. durch Umsetzung der endständigen freien Hydroxylfunktion des Polyethylenoxidblocks zu einem Sulfat- oder Phosphatester (z. B. als Alkali- und Erdalkalimetallsalze), wie z. B. Genapol^{®}LRO oder Dispergiermittel 3618 (Clariant), Emulphor^{®} (BASF) oder Crafol^{®}AP (Cognis),
2) Alkali- und Erdalkalimetallsalze von Alkylarylsulfonsäuren mit linearer oder verzweigter Alkylkette, wie Phenylsulfonat CA oder Phenylsulfonat CAL (Clariant), Atlox^{®} 3377BM (ICI), Empiphos^{®}TM-Reihe (Huntsman)
3) Polyelektrolyte, wie Ligninsulfonate, Kondensationsprodukte aus Naphthalinsulfonat und Formaldehyd, Polystyrolsulfonat oder sulfonierte ungesättigte oder aromatische Polymere (Polystyrole, Polybutadiene oder Polyterpene), wie Tamol^{®}-Reihe (BASF), Morwet^{®}D425 (Witco), Kraftsperse^{®}-Reihe (Westvaco), Borresperse^{®}-Reihe (Borregard).

Bevorzugte ionische Emulgatoren/Dispergatoren sind z.B. Salze von Alkylarylsulfonsäuren und Polyelektrolyte aus der Polykondensation von Naphthalinsulfonat und Formaldehyd.

Soweit in den erfindungsgemäßen Ölsuspensionskonzentraten ionische Emulgatoren und Dispergatoren enthalten sind, beträgt deren Gewichtsanteil im allgemeinen 0,1 bis 20 Gew.-%, insbesondere 0,5 bis 8 Gew.-%.

Werden nichtionische oder ionische Emulgatoren und Dispergatoren, neben ihren emulgierenden/dispergierenden Eigenschaften, auch zur Erhöhung der biologischen Effektivität, z. B. als Penetrations- oder Haftmittel, eingesetzt, kann sich ihr Anteil in den erfindungsgemäßen Ölsuspensionskonzentraten auf bis zu 60 Gew.-% erhöhen.

Als Verdickungs- und Thixotropiermittel kommen z.B. in Frage:
1) modifizierte natürliche Silikate, wie chemisch modifizierte Bentonite, Hectorite, Attapulgite, Montmorillonite, Smektite oder andere Silikatmineralien, wie Bentone^{®} (Elementis), Attagel^{®} (Engelhard), Agsorb^{®} (Oil-Dri Corporation) oder Hectorite^{®} (Akzo Nobel)
2) synthetische Silikate, wie Silikate der Sipernat^{®}-, Aerosil^{®}- oder Durosil^{®}-Reihe (Degussa), der CAB-O-SIL^{®}-Reihe (Cabot) oder der Van Gel-Reihe (R.T. Vanderbilt),
3) Verdicker auf Basis synthetischer Polymere, wie Verdicker der Thixin^{®}- oder Thixatrol^{®}-Reihe (Elementis).
4) Verdicker auf Basis natürlicher Polymere und natürlicher Öle, z.B. aus der Thixin^{®}- oder Thixatrol^{®}-Reihe (Elementis).

Bevorzugte Verdickungs- und Thixotropiermittel sind z.B. modifizierte Schichtsilikate und Verdicker auf Basis synthetischer Polymere.

Soweit in den erfindungsgemäßen Ölsuspensionskonzentraten Verdickungs- und Thixotropiermittel enthalten sind, beträgt deren Gewichtsanteil im allgemeinen 0,1 bis 5 Gew.-%, insbesondere 0,2 bis 3 Gew.-%.

Bevorzugt sind erfindungsgemäße Ölsuspensionskonzentrate, enthaltend:
a) 0,01 bis 50 Gew.-%, vorzugsweise 0,1 bis 30 Gew.-% eines oder mehrerer Herbizide (A) und (B), in suspendierter Form,
b) 5 bis 95 Gew.-%, vorzugsweise 20 bis 80 Gew.-% eines oder mehrerer Lösungsmittel,
c) optional 0,5 bis 60 Gew.-%, vorzugsweise 1 bis 30 Gew.-% eines oder mehrerer Sulfosuccinate,
d) optional 0,5 bis 50 Gew.-%, vorzugsweise 3 bis 20 Gew.-% eines oder mehrerer von a) verschiedener agrochemischer Wirkstoffe,
e) optional 0,01 bis 20 Gew.-%, vorzugsweise 0,01 bis 10 Gew.-% eines oder mehrerer anorganischer Salze,
f) optional 1 bis 20 Gew.-% eines oder mehrerer nichtionischer Emulgatoren und Dispergatoren,
   optional 1 bis 20 Gew.-% eines oder mehrerer ionischer Emulgatoren und Dispergatoren
   optional 0,1 bis 5 Gew.-%, vorzugsweise 0,2 bis 3 Gew.-% eines oder mehrerer Verdickungs- und Thixotriopiermittel.

Die erfindungsgemäßen Ölsuspensionskonzentrate können durch bekannte Verfahren, z.B. durch Vermischen der Komponenten hergestellt werden. So kann z.B. eine Vormischung hergestellt werden, indem dem organischen Lösungsmittel b) gegebenenfalls enthaltenes Sulfosuccinat c) und gegebenenfalls weitere Hilfs- und Zusatzstoffe f) zugegeben werden. Dann werden gegebenenfalls verwendete lösliche agrochemische Wirkstoffe d) in der Vormischung gelöst. Nach Abschluß des Lösungsprozesses wird festes Herbizid a) und gegebenenfalls verwendete unlösliche Wirkstoffe d) sowie anorganische Salze e) in die Mischung suspendiert. Die grobe Suspension wird, gegebenenfalls nach einer Vorvermahlung, einer Feinvermahlung unterzogen.

In einer anderen Ausführungsvariante wird festes Herbizid a), sowie gegebenenfalls verwendete unlösliche Komponenten d), e) und f), in das organische Lösungsmittel b), welches optional ein Sulfosuccinat c) enthält, suspendiert und einer Vermahlung unterzogen. Gegebenenfalls verwendete lösliche Wirkstoffe d) sowie Hilfs- und Zusatzstoffe f), die keiner Vermahlung bedürfen oder für den Mahlvorgang nicht notwendig sind, werden nach der Vermahlung zugesetzt.

Zur Herstellung der Mischungen können gängige Mischapparate verwendet werden, die gegebenenfalls temperiert werden. Zur Vorvermahlung können z.B. Hochdruckhomogenisatoren oder nach dem Rotor-Stator Prinzip arbeitende Mühlen verwendet werden, wie Ultraturax-Homogenisatoren, z.B. der Fa. IKA, oder Zahnkolloidmühlen, z.B. der Fa. Puck. Für die Feinvermahlung können z.B. diskontinuierliche Perlmühlen, z.B. der Fa. Drais oder kontinuierliche Perlmühlen, der z.B. Fa. Bachofen verwendet werden. Je nach den Eigenschaften der gegebenenfalls vorbehandelten Komponenten, sowie verfahrens- und sicherheitstechnischen Anforderungen und aus wirtschaftlichen Gründen, kann das Herstellverfahren angepaßt und gegebenenfalls auf eine Vorvermahlung oder auch auf eine Feinvermahlung der Suspension verzichtet werden.

Die zur Herstellung eingesetzten Komponenten a) bis f) können Wasser als Nebenbestandteil enthalten, welches sich in den erfindungsgemäßen Ölsuspensionskonzentraten wiederfindet. Die erfindungsgemäßen Ölsuspensionskonzentrate können daher geringe Mengen von Wasser enthalten, im allgemeinen von 0 bis 5 Gew.-%. Bevorzugterweise werden die erfindungsgemäßen Ölsuspensionskonzentrate keinem Trocknungsprozeß unterzogen.

Zur Anwendung können die erfindungsgemäßen Ölsuspensionskonzentrate gegebenenfalls in üblicher Weise verdünnt werden (z.B. mittels Wasser), z.B. zu Suspensionen, Emulsionen, Suspoemulsionen oder Lösungen, vorzugsweise zu Emulsionen. Es kann vorteilhaft sein, erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche herbiziden Mittel, auf Basis der erfindungsgemäßen Ölsuspensionskonzentrate.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Formulierungen enthalten in der Regel 0,1 bis 99 Gewichtsprozent, insbesondere 2 bis 95 Gew.-%, Wirkstoffe der Typen A und/oder B, wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen. Staubförmige Formulierungen enthalten in der Regel 5 bis 20 Gew.-% an Wirkstoff, versprühbare Lösungen etwa 0,2 bis 25 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%. Bei Ölsuspensionskonzentraten beträgt die Wirkstoffkonzentration in der Regel 0,01 bis 50 Gew.-%

Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Die herbizide Wirkung der erfindungsgemäßen Herbizid-Kombinationen kann z.B. durch oberflächenaktive Substanzen verbessert werden, vorzugsweise durch Netzmittel aus der Reihe der Fettalkohol-Polyglykolether. Die Fettalkohol-Polyglykolether enthalten vorzugsweise 10 - 18 C-Atome im Fettalkoholrest und 2 - 20 Ethylenoxideinheiten im Polyglykoletherteil. Die Fettalkohol-polyglykolether können nichtionisch vorliegen, oder ionisch, z.B. in Form von Fettalkoholpolyglykolethersulfaten vorliegen, die z.B als Alkalisalze (z.B. Natrium- und Kaliumsalze) oder Ammoniumsalze, oder auch als Erdalkalisalze wie Magnesiumsalze verwendet werden, wie C₁₂/C₁₄-Fettalkohol-diglykolethersulfat-Natrium (Genapol^{®} LRO, Clariant GmbH); siehe z.B. EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Nichtionische Fettalkohol-polyglykolether sind beispielsweise 2 - 20, vorzugsweise 3 - 15, Ethylenoxideinheiten enthaltende (C₁₀-C₁₈)-, vorzugsweise (C₁₀-C₁₄)-Fettalkoholpolyglykolether (z.B. Isotridecylalkohol-polyglykolether) wie Genapol^{®} X-030, Genapol^{®} X-060, Genapol^{®} X-080 oder Genapol^{®} X-150 (alle von Clariant GmbH). Die vorliegende Erfindung umfaßt ferner die Kombination von Verbindungen der Formel (I) und deren Salzen mit den vorgängig genannten Netzmitteln aus der Reihe der Fettalkohol-Polyglykolether, die vorzugsweise 10 - 18 C-Atome im Fettalkoholrest und 2 - 20 Ethylenoxideinheiten im Polyglykoletherteil enthalten und nichtionisch oder ionisch (z.B. als Fettalkohol-polyglykolethersulfate) vorliegen können. Bevorzugt sind C₁₂/C₁₄-Fettalkohol-diglykolethersulfat-Natrium (Genapol^{®} LRO, Clariant GmbH) und Isotridecylalkohol-Polyglykolether, mit 3 - 15 Ethylenoxideneinheiten, z.B. aus der Genapol^{®} X-Reihe wie Genapol^{®} X-030, Genapol^{®} X-060, Genapol^{®} X-080 und Genapol^{®} X-150 (alle von Clariant GmbH). Weiterhin ist bekannt, daß Fettalkohol-Polyglykolether wie nichtionische oder ionische Fettalkohol-polyglykolether (z.B. Fettalkohol-Polyglykolethersulfate) auch als Penetrationshilfsmittel und Wirkungsverstärker für eine Reihe anderer Herbizide, unter anderem auch für Herbizide aus der Reihe der Imidazolinone geeignet sind (siehe z.B. EP-A-0502014).

Die herbizide Wirkung der erfindungsgemäßen Herbizid-Kombinationen kann auch durch die Verwendung von Pflanzenölen verstärkt werden. Unter dem Begriff Pflanzenöle werden Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl oder Rhizinusöl, insbesondere Rapsöl verstanden, sowie deren Umesterungsprodukte, z.B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für C₁₀-C₂₂-Fettsäure-Ester sind Ester, die durch Umsetzung von Glycerin oder Glykol mit den C₁₀-C₂₂-Fettsäuren erhalten werden, wie sie z.B. in Ölen aus ölliefernden Pflanzenarten enthalten sind, oderC₁-C₂₀-Al kyl-C₁₀-C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-C₁₀-C₂₂-Fettsäure-Ester bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure,

Linolsäure oder Linolensäure.

Die Pflanzenöle können in den erfindungsgemäßen herbiziden Mitteln z.B. in Form kommerziell erhältlicher ölhaltiger Formulierungszusatzstoffe, insbesondere solcher auf Basis von Rapsöl wie Hasten^{®} (Victorian Chemical Company, Australien, nachfolgend Hasten genannt, Hauptbestandteil: Rapsölethylester), Actirob^{®}B (Novance, Frankreich, nachfolgend ActirobB genannt, Hauptbestandteil: Rapsölmethylester), Rako-Binol^{®} (Bayer AG, Deutschland, nachfolgend Rako-Binol genannt, Hauptbestandteil: Rapsöl), Renol^{®} (Stefes, Deutschland, nachfolgend Renol genannt, Pflanzenölbestandteil: Rapsölmethylester) oder Stefes Mero^{®} (Stefes, Deutschland, nachfolgend Mero genannt, Hauptbestandteil: Rapsölmethylester) enthalten sein.

Zur Anwendung werden die in handelsüblicher Form vorliegenden Formulierungen gegebenenfalls in üblicher Weise verdünnt, z.B. mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Fläche auf der die Pflanzen wachsen, z.B. die Weidefläche oder die Anbaufläche ausgebracht werden, vorzugsweise auf die grünen Pflanzen und Pflanzenteile und gegebenenfalls zusätzlich auf den Boden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden.
A. Formulierungsbeispiele allgemeiner Art
   a) Ein Stäubemittel wird erhalten, indem man 10 Gew.-Teile eines Wirkstoffs/Wirksstoffgemischs und 90 Gew.-Teile Talkum als Inertstoff mischt und in einer Schlagmühle zerkleinert.
   b) Ein in Wasser leicht dispergierbares, benetzbares Pulver wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.
   c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (7Triton^{®} X 207), 3 Gew.-Teilen Isotridecanolpolyglykolether (8 EO) und 71 Gew.-Teilen paraffinischem Mineralöl (Siedebereich z.B. ca. 255 bis 277EC) mischt und in einer Reibkugelmühle auf eine Feinheit von unter 5 Mikron vermahlt.
   d) Ein emulgierbares Konzentrat wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.
   e) Ein in Wasser dispergierbares Granulat wird erhalten indem man
      75 Gew.-Teile eines Wirkstoffs/Wirksstoffgemischs,
      10 Gew.-Teile ligninsulfonsaures Calcium,
      5 Gew.-Teile Natriumlaurylsulfat,
      3 Gew.-Teile Polyvinylalkohol und
      7 Gew.-Teile Kaolin
      mischt, auf einer Stiftmühle mahlt und das Pulver in einem Wirbelbett durch
      Aufsprühen von Wasser als Granulierflüssigkeit granuliert.
   f) Ein in Wasser dispergierbares Granulat wird auch erhalten, indem man
      25 Gew.-Teile eines Wirkstoffs/Wirksstoffgemischs,
      5 Gew.-Teile 2,2'-dinaphthylmethan-6,6'-disulfonsaures Natrium,
      2 Gew.-Teile oleoylmethyltaurinsaures Natrium,
      1 Gew.-Teil Polyvinylalkohol,
      17 Gew.-Teile Calciumcarbonat und
      50 Gew.-Teile Wasser
      auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.
B. Biologische Beispiele

### 1. Herbizide Wirkung gegen Unkräuter (Gewächshausversuche)

Die Samen oder Rhizomstücke von typischen Schadpflanzen wurden in 13-er Rundtöpfen in sandigem Lehmboden ausgelegt, mit Erde abgedeckt und im Gewächshaus unter guten Wachstumsbedingungen angezogen. Die Behandlung mit den erfindungsgemäßen Mitteln erfolgte nach dem Auflaufen der Schadpflanzen in der Regel im 2 bis 3-Blattstadium in verschiedenen Dosierungen mit einer Wasseraufwandmenge von umgerechnet 100 bis 400 I/ha.

Nach der Anwendung (ca. 4 Wochen nach Applikation) wurde die herbizide Wirksamkeit der Wirkstoffe bzw. Wirkstoffmischungen anhand der behandelten Pflanzen im Vergleich zu unbehandelten Kontrollen visuell bonitiert. Dabei wurde Schädigung und Entwicklung aller oberirdischen Pflanzenteile erfaßt. Die Bonitierung erfolgte nach einer Prozentskala (100% Wirkung = alle Pflanzen abgestorben; 50 % Wirkung = 50% der Pflanzen und grünen Pflanzenteile abgestorben; 0 % Wirkung = keine erkennbare Wirkung).

Die Ergebnisse sind in den nachfolgenden Tabellen angegeben, wobei in Klammern die Wirkung bei unabhängiger Anwendung der Wirkstoffe (A) und (B) angegeben ist.

**Tabelle 1:**

| Wirkstofif(e) | Aufwandmenge gai/ha | Veronica persica % Wirkung | Lamium amplexicaule % Wirkung |
|---|---|---|---|
| A) Amidosulfuron | 20 | 20 | 18 |
| B) Picloram | 60 | 62 | 75 |
| A)+B) | 20 + 60 | 100 (20 + 62) | 100 (18 + 75) |

### 2. Herbizide Wirkung gegen holzige Strauchverunkrautung (Gewächshausversuche)

Die Anzucht der Pflanzen erfolgte bis zum 5 bis 6-Blattstadium. Die Herbizidapplikation und Versuchsauswertung erfolgte wie in Beispiel 1 beschrieben.

**Tabelle 2:**

| Wirkstoff(e) | Aufwandmenge gai/ha | Acacia farnesiana % Wirkung | Mimosa pigra % Wirkung |
|---|---|---|---|
| A) Amidosulfuron | 40 | 43 | 20 |
| B) Aminopyralid | 60 | 55 | 73 |
| A)+B) | 40 + 60 | 100 (43 + 55) | 100 (20 + 73) |

## Patentansprüche

1. Herbizid-Kombination enthaltend Komponenten (A) und (B), wobei
(A) ein oder mehrere Herbizide aus der Gruppe der Verbindungen der Formel (I) und deren Salzen bedeutet, 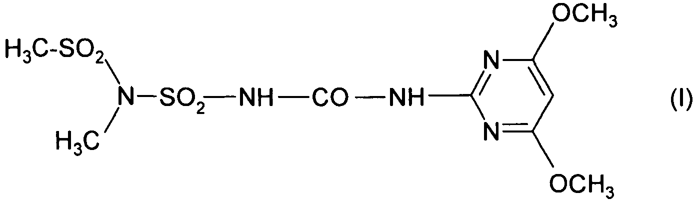 und
(B) ein oder mehrere Herbizide ausgewählt aus der Gruppe
Picloram und dessen Salze und Ester und
Aminopyralid und dessen Salze und Ester.

2. Herbizid-Kombination nach Anspruch 1, worin als Komponente (A) eines oder mehrere Herbizide ausgewählt aus der Gruppe Amidosulfuron und Amidosulfuron-Natrium enthalten sind.

3. Herbizid-Kombination nach einem oder mehreren der Ansprüche 1 bis 2, zusätzlich enthaltend eine oder mehrere weitere Komponenten aus der Gruppe enthaltend agrochemische Wirkstoffe anderer Art, im Pflanzenschutz übliche Zusatzstoffe und Formulierungshilfsmittel.

4. Herbizid-Kombination nach einen oder mehreren der Ansprüche 1 bis 3, zusätzlich enthaltend eines oder mehrere von Komponenten (A) und (B) verschiedene Herbizide und/oder Safener.

5. Herbizid-Kombination nach einem oder mehreren der Ansprüche 1 bis 4, zusätzlich enthaltend einen oder mehrere Wirkstoffe aus der Gruppe lodosulfuron und dessen Salze und Ester, Mefenpyr und dessen Salze und Ester, Bromoxynil und dessen Salze und Ester, loxynil und dessen Salze und Ester, Metribuzin, Propoxycarbazone und dessen Salze und Ester, Ethofumesate, Diflufenican und Ethoxysulfuron und dessen Salze und Ester.

6. Verfahren zur Bekämpfung von Schadpflanzen, worin die Komponenten der Herbizid-Kombination, definiert gemäß einem oder mehreren der Ansprüche 1 bis 5, gemeinsam oder getrennt auf die Pflanzen, Pflanzenteile, Pflanzensamen oder die Fläche, auf der die Pflanzen wachsen, appliziert werden.

7. Verfahren nach Anspruch 6 zur selektiven Bekämpfung von Schadpflanzen in Pflanzenkulturen.

8. Verfahren nach Anspruch 7 zur Bekämpfung von Schadpflanzen in monokotylen Pflanzenkulturen.

9. Verfahren nach Anspruch 7 oder 8, worin die Pflanzenkulturen gentechnisch verändert oder durch Mutationsselektion erhalten sind.

10. Verwendung der nach einem der Ansprüche 1 bis 5 definierten Herbizid-Kombination zur Bekämpfung von Schadpflanzen.

## Claims

1. A herbicide combination comprising components (A) and (B), where
(A) denotes one or more herbicides selected from the group of the compounds of the formula (I) and their salts 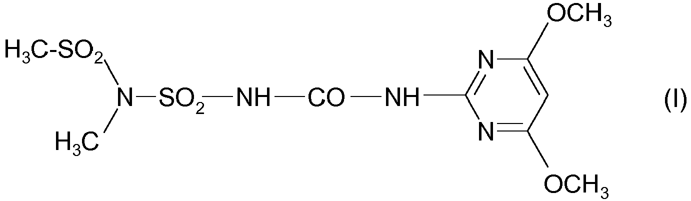 and
(B) denotes one or more herbicides selected from the group consisting of picloram and its salts and esters,
and aminopyralid and its salts and esters.

2. The herbicide combination as claimed in claim 1 which comprises, as component (A), one or more herbicides selected from the group consisting of amidosulfuron and amidosulfuron-sodium.

3. The herbicide combination as claimed in one or more of claims 1 to 2, additionally comprising one or more further components selected from the group consisting of agrochemically active compounds of a different type, formulation auxiliaries and additives customary in crop protection.

4. The herbicide combination as claimed in one or more of claims 1 to 3, additionally comprising one or more safeners and/or herbicides different from components (A) and (B).

5. The herbicide combination as claimed in one or more of claims 1 to 4, additionally comprising one or more active compounds from the group consisting of iodosulfuron and its salts and esters, mefenpyr and its salts and esters, bromoxynil and its salts and esters, ioxynil and its salts and esters, metribuzin, propoxycarbazone and its salts and esters, ethofumesate, diflufenican and ethoxysulfuron and its salts and esters.

6. A method for controlling harmful plants which comprises applying the components of the herbicide combination, defined according to one or more of claims 1 to 5, jointly or separately to the plants, plant parts, plant seeds or the area on which the plants grow.

7. The method as claimed in claim 6 for the selective control of harmful plants in plant crops.

8. The method as claimed in claim 7 for the control of harmful plants in monocotyledonous plant crops.

9. The method as claimed in claim 7 or 8 in which the plant crops are genetically modified or have been obtained by mutation/selection.

10. The use of the herbicide combination as defined in any of claims 1 to 5 for controlling harmful plants.

## Revendications

1. Combinaison herbicide contenant les composants (A) et (B), où
(A) signifie un ou plusieurs herbicides du groupe des composés de formule (I) et leurs sels, 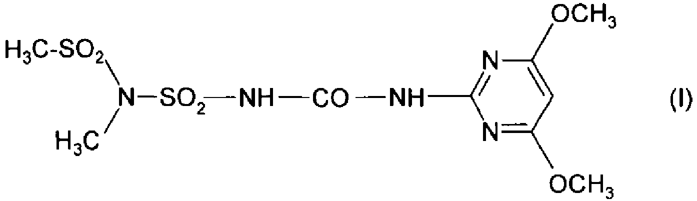 et
(B) signifie un ou plusieurs herbicides choisis dans le groupe formé par le piclorame et ses sels et esters et l'aminopyralide et ses sels et esters.

2. Combinaison herbicide selon la revendication 1, contenant, comme composant (A), un ou plusieurs herbicides choisis dans le groupe formé par l'amidosulfuron et l'amidosulfuron-sodium.

3. Combinaison herbicide selon l'une ou plusieurs des revendications 1 à 2, contenant en outre un ou plusieurs autres composants du groupe contenant des substances actives agrochimiques d'un autre type, des additifs et des adjuvants de formulation usuels dans la phytoprotection.

4. Combinaison herbicide selon l'une ou plusieurs des revendications 1 à 3, contenant en outre un ou plusieurs herbicides et/ou phytoprotecteurs différents des composants (A) et (B).

5. Combinaison herbicide selon l'une ou plusieurs des revendications 1 à 4, contenant en outre une ou plusieurs substances actives du groupe formé par l'iodosulfuron et ses sels et esters, le méfenpyr et ses sels et esters, le bromoxynil et ses sels et esters, l'ioxynil et ses sels et esters, la métribuzine, la propoxycarbazone et ses sels et esters, l'éthofumésate, le diflufénican et l'éthoxysulfuron et ses sels et esters.

6. Procédé pour lutter contre les plantes nuisibles, les composants de la combinaison herbicide, définie selon l'une ou plusieurs des revendications 1 à 5, étant appliqués ensemble ou séparément sur les plantes, les parties de plantes, les graines de plantes ou la surface sur laquelle les plantes poussent.

7. Procédé selon la revendication 6 pour la lutte sélective contre les plantes nuisibles dans les cultures de plantes.

8. Procédé selon la revendication 7 pour la lutte contre les plantes nuisibles dans les cultures de plantes monocotylédones.

9. Procédé selon la revendication 7 ou 8, dans lequel les cultures de plantes sont génétiquement modifiées ou obtenues par sélection de mutations.

10. Utilisation de la combinaison herbicide définie selon l'une quelconque des revendications 1 à 5 pour lutter contre les plantes nuisibles.
